# EUROPÄISCHE PATENTSCHRIFT

(11) **EP 3 329 415 B1**
(45) Veröffentlichungstag und Bekanntmachung des Hinweises auf die Patenterteilung: **02.12.2020**
(21) Anmeldenummer: 16747469.1
(22) Anmeldetag: 26.07.2016
(51) Int. Cl.: G06F 9/455, G06F 8/654, G06F 21/77

(54) **CHIPKARTE MIT HAUPTAPPLIKATION UND PERSISTENZAPPLIKATION ERLAUBT HAUPTAPPLIKATIONUPDATE OHNE DIE BENUTZERDATEN IM PERSISTENZAPPLIKATION ZU ÄNDERN**
CHIPCARD WITH A MAIN AND A PERSISTENT APPLICATION ALLOWS AN UPDATE OF THE MAIN APPLICATION WITHOUT CHANGES TO THE USER DATA STORED IN THE PERSISTENS APPLICATION
CARTE A PUCE AVEC UNE APPLICATION PRINCIPALE ET UNE APPLICATION PERSISTANTE PERMETTANT DE METTRE A JOUR L'APPLICATION PRINCIPALE SANS MODIFIER LES DONNEES D'UTILISATEUR STOCKEES DANS L'APPLICATION PERSISTANTE

(30) Priorität: 29.07.2015 DE 102015214422
(43) Veröffentlichungstag der Anmeldung: 06.06.2018
(73) Patentinhaber: Bundesdruckerei GmbH, 10969 Berlin (DE); CV Cryptovision GmbH, 45886 Gelsenkirchen (DE)
(72) Erfinder: MAI, Thomas, 46236 Bottrop (DE); LOHOFF, Ansgar, 45879 Gelsenkirchen (DE); MÜLLER, Frank, 10407 Berlin (DE); SCHOLZE, Steffen, 13469 Berlin (DE); SCHWAN, Matthias, 10437 Berlin (DE); HESSE, Danny, 10785 Berlin (DE); FILZHUTH, Elke, 12359 Berlin (DE); WIRTH, Klaus-Dieter, 12683 Berlin (DE)
(74) Vertreter: Richardt Patentanwälte PartG mbB
(86) Internationale Anmeldenummer: PCT/EP2016/067753
(87) Internationale Veröffentlichungsnummer: WO 2017/017085

(56) Entgegenhaltungen:
- EP-A1- 1 650 717
- DE-A1-102008 033 976
- FR-A1- 2 864 650
- US-A1- 2015 096 045
- Wallhaek: "SkySIM CX Hercules v2.0 Security Target Lite", , 18. Dezember 2014 (2014-12-18), XP055308419, Gefunden im Internet: URL:https://www.commoncriteriaportal.org/f iles/epfiles/ASE_ST-Lite_SkySIM_CX_Hercule s_Basic Configuration.pdf [gefunden am 2016-10-06]

## Beschreibung

### Technisches Gebiet

Die vorliegenden Darstellungen betreffen Chipkarten und insbesondere Verfahren zum Verwalten von Daten und Applikationen in Chipkarten.

### Stand der Technik

Wesentliche Aspekte von Chipkarten, unter anderem die Art der Datenverwaltung, Betriebssystemeigenschaften und verschiedene Sicherheitsaspekte, die bei der Ausführung von Chipkartenapplikationen von Relevanz sind, sind gemäß internationaler Standards normiert.

ISO 7816 beispielsweise ist ein Standard der Internationalen Organisation für Normung und der internationalen elektrotechnischen Kommission, der wesentliche Merkmale von Chipkarten vereinheitlicht. Nach diesem Standard ist eine sogenannte "Application Protocol Data Unit" (APDU) die Kommunikationseinheit zwischen Chipkarte und einer Chipkartenanwendung. Die APDU ist eine Kommunikationseinheit auf Anwendungsebene. Im OSI-Schichtenmodel entspricht das der Schicht 7. Die APDU wird unterschieden in command APDU (CAPDU), welche Kommandos an die Chipkarte übermittelt, und response APDU (RAPDU), die die Antwort der Karte auf ein Kommando übermittelt. Diese Kommunikation findet nach Etablierung der Kommunikation mittels Answer to Reset und optionaler Protocol Type Selection statt. Die Strukturen von command APDU und response APDU sind in der Norm ISO 7816-4 festgelegt.

Chipkartenapplikationen können mit verschiedenen Programmiersprachen implementiert sein. Eine häufig verwendete Sprache ist Java Card, eine Variante der Programmiersprache Java. Java Card erlaubt es, Java Card Applets auf Chipkarten auszuführen. Java Card Applets werden nur ausgeführt, wenn eine Chipkarte mit einem Java Card Betriebssystem ("Javacard") an eine externe Stromversorgung angeschlossen ist und die Java VM der Karte die Anweisung erhalten hat, ein bestimmtes Applet zu selektieren. Die Sicherheitsmechanismen von Java erlauben, dass eine Java Chipkarte mehrere Applets enthält, die einander nicht beeinflussen. Java Card Applets können nachträglich auf einer Java-Chipkarte installiert werden. Sie sind von der Hardware der Chipkarte unabhängig.

Auf Javacards oder Smartcards mit vergleichbarem Betriebssystem werden üblicherweise mehrere Applikationsprogramme ("Applikationen", "Applets") ausgeführt, um Daten auf der Karte zu verarbeiten. Eine grundlegende Eigenschaft des Java Card-Betriebssystems und vergleichbarer anderer Betriebssysteme ist, dass die verschiedenen Applikationen normalerweise getrennt voneinander ausgeführt werden, sodass eine Applikation nicht die Daten einer anderen Applikation lesen oder manipulieren kann. Eine Applikation und die von dieser Applikation verarbeiteten Daten bilden somit eine Einheit, die von anderen Applikationen und den von diesen anderen Applikationen verarbeiteten Daten isoliert ist.

### Technisches Problem und grundlegende Lösungen

Es ist zwar möglich, Applikationen so zu konfigurieren, dass sie Zugriff aufeinander haben. In vielen Fällen ist eine solche Konfiguration aus Sicherheitsgründen jedoch nicht wünschenswert. Außerdem bietet eine Umkonfiguration keine Lösung für das Problem, dass die Programlogik einer Applikation veraltet sein kann und durch eine neue Version (Update) ersetzt werden muss. Veraltete Applikationen können ein Sicherheitsrisiko darstellen, zum Beispiel dann, wenn eine Sicherheitslücke in einer Applikation entdeckt und publik geworden ist. Im Stand der Technik bekannte Verfahren zur Durchführung von Updates von Applikationen in Chipkarten sehen vor, veraltete Applikationen durch eine neue Version dieser Applikation zu ersetzen. Da auf Chipkarten Applikationen und die von ihnen verarbeiteten Daten eine Einheit bilden, gehen im Zuge des Updates der Applikation notwendigerweise Daten verloren, die von der veralteten Applikationsversion verwaltet und bereitgestellt wurden. Der Erfindung liegt demgegenüber die Aufgabe zugrunde, ein verbessertes Verfahren zur Speicherung und Verarbeitung von Daten in Chipkarten zu schaffen, sowie entsprechend verbesserte Chipkarten. Weitere Verfahren zur Speicherung und Verarbeitung von Daten für Applikations-Updates in Chipkarten sind bekannt aus US 2015/096045, DE102008 033976, EP1650717, FR2864650 und EP2827275.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Der Begriff "Chipkarte" bezeichnet vorliegend ein tragbares Datenverarbeitungsgerät, welches einen eingebauten integrierten Schaltkreis (Chip) mit einem Mikroprozessor beinhaltet sowie einen nicht-flüchtigen Speicher. Eine Chipkarte kann z.B. als Plastikkarte oder kartonbasierte Karte realisiert sein. Die Chipkarte kann insbesondere sowohl eine Smartcard, wie beispielsweise eine Zugangskarte, eine Konten-, Geld- oder Kreditkarte, als auch ein Wert- oder Sicherheitsdokument, wie beispielsweise ein Reisepass, Aufenthaltstitel oder Personalausweis der neuesten Generation sein. Bei der Chipkarte kann es sich insbesondere um eine Chipkarte handein, die dem GlobalPlatform Standard entspricht. Dies ist beispielsweise für Javacard-Chipkarten der Fall. Javacard-Chipkarten sind Mikroprozessorkarten mit einer reduzierten Java-Virtual-Machine als Betriebssystem. Bei diesen Karten kann ein Programmierer nach der Fertigstellung der Karte über ein Kartenlesegerät und eine spezielle Ladesoftware neue Applikationen auf die Karte laden. So können Karten mit sehr speziellen Funktionalitäten in Kleinserie kosteneffizient hergestellt werden. Javacard Betriebssysteme sind z.B. JCOP (IBM/NXP) und andere.

Der Begriff "Schnittstelle zu einer chipkartenexternen Anwendung" einer Applikation bezeichnet eine Schnittstelle zum Austausch von digital codierten Daten zwischen dieser auf der Chipkarte ausgeführten Applikation und einer davon getrennten Datenverarbeitungsanwendung, die z.B. auf einem Nutzer-Computersystem, Lesegerät, Server oder Chipkartenterminal ausgeführt wird. Diese Schnittstelle kann sich einer externen Hardwareschnittstelle der Chipkarte bedienen. Beispiele für externe Hardwareschnittstellen einer Chipkarte sind die von den Bank- und Kreditkarten bekannten Kontaktfelder und die aus dem Bereich der elektronischen Ausweisdokumente bekannte RFID-Schnittstellen zur hochfrequenten drahtlosen Signalübertragung.

Eine "Sicherheitsdomäne" ist ein geschützter Speicherbereich auf dem Speicher einer Chipkarte. Der Sicherheitsdomäne können z.B. Anwendungen zugeordnet sein, welchen dadurch die Nutzung von Diensten, die unter dieser Sicherheitsdomäne verfügbar sind (z.B. kryptographische Dienste), ermöglicht wird. Standardmä-βig existiert auf einer Chipkarte nur die Sicherheitsdomäne des Kartenausstellers. Wenn eine andere Institution eine eigene Sicherheitsdomäne auf der Chipkarte anlegen will, z.B. um für die eigenen Anwendungen eine sichere Anwendungsumgebung bereitzustellen, kann eine entsprechende zusätzliche Sicherheitsdomäne durch den Kartenherausgeber erstellt und in der Chipkarte eingerichtet werden. Somit genießen auch die Applikationen, die nicht vom Kartenherausgeber selbst auf der Karte installiert werden, ein hohes Vertrauensniveau.

Unter einer "Applikation" (auch "Applet" genannt) wird im Folgenden eine Programmlogik, insbesondere eine softwarebasierte Anwendungs-Programmlogik verstanden, die auf einer Chipkarte installiert ist und zur Ausführung durch einen Prozessor der Chipkarte bestimmt ist. Beispielsweise kann es sich bei der Chipkarte um eine Javacard handeln und bei der Applikation um eine Java Card Applikation, also einer Applikation, die mit der Programmiersprache Java Card programmiert wurde. Unter Applikationen, die "voneinander isoliert" sind, werden im Folgenden Applikationen verstanden, die nicht auf die Daten der anderen Applikation lesend oder schreibend zugreifen können, und die nicht die andere Applikation aufrufen oder modifizieren können.

Unter einer "chipkartenexternen Anwendung" bezüglich einer bestimmten Chipkarte wird im Folgenden jegliche hardware- firmware- und/oder softwarebasierte Programmlogik verstanden, die von einem Prozessor eines Datenverarbeitungsgeräts ausgeführt wird, wobei das Datenverarbeitungsgerät nicht diese bestimmte Chipkarte ist. Das Datenverarbeitungsgerät kann also z.B. eine andere Chipkarte, ein Server, ein Nutzer-Computer, ein Lesegerät, ein Terminal oder ein anderes datenverarbeitendes Gerät sein.

Unter einem "Nachladeautomat", auch "Aktualisierungsterminal" genannt, ist ein Terminal oder Lesegerät, welches dazu konfiguriert ist, neue Versionen von einem oder von mehreren Applikationen auf eine Chipkarte aufzuspielen. Der Nachladeautomat kann z.B. von einer Behörde oder einer Firma bereitgestellt werden. Es ist möglich, dass es sich bei dem Nachladeautomaten um ein Terminal oder Lesegerät handelt, das die neue Applikationsversion bereits lokal gespeichert hat. Es ist aber auch möglich, dass es sich bei dem Nachladeautomaten um ein Terminal handelt, das mit einer Middleware über ein Netzwerk, z.B. das Internet oder Intranet, verbunden ist. Beispielsweise ist der Nachladeautomat dazu konfiguriert, die benötigte neue Version der Applikation, die auf der Chipkarte installiert werden soll, dynamisch von der Middleware anzufordern und zu empfangen.

Unter einer "chipkartenexternen Update-Anwendung" wird eine chipkartenexterne Anwendung verstanden, die der Installation und/oder dem Update von Applikationen auf einer Chipkarte dient. Die Update-Anwendung kann z.B. Bestandteil der Programmlogik eines Nachladeautomaten sein oder einer Middleware, die mit dem Nachladeautomaten verbunden ist. Die Update-Anwendung kann beispielsweise dazu dienen, mehrere Versionen einer oder mehrerer Applikation zu verwalten und unter definierten Bedingungen auf einer Chipkarte erstmalig oder im Zuge eines Updateprozesses in weichem eine veraltete Version ersetzt wird, zu installieren.

Bei einem "Lesegerät" handelt es sich um ein Datenverarbeitungsgerät, das mit einer kontaktlosen oder kontaktbehafteten Schnittstelle zum Datenaustausch mit einer Chipkarte ausgestattet ist. Ein Lesegerät kann tragbar ausgestaltet sein.

Ein Message Authentication Code "MAC" ist ein Datenwert der dazu dient, Gewissheit über den Ursprung von Daten oder Nachrichten zu erhalten und ihre Integrität zu überprüfen. MAC-Algorithmen erfordern zwei Eingabeparameter: die zu schützenden Daten und einen geheimen Schlüssel. MAC-Algorithmen berechnen aus diesen Daten eine Prüfsumme, den Message Authentication Code.

In einem Aspekt betrifft die Erfindung eine Chipkarte mit einem Prozessor und einem nicht-flüchtigen Speichermedium. Die Chipkarte ist so konfiguriert, dass auf dem Speichermedium installierte Applikationen, die nicht zur gleichen Sicherheitsdomäne gehören, voneinander isoliert sind. Auf dem Speichermedium sind zumindest eine Persistenzapplikation und eine Hauptapplikation installiert. Die Persistenzapplikation ist eine Applikation, die einer ersten Sicherheitsdomäne zugeordnet ist und die geschützt ist gegen Zugriff durch jegliche chipkartenexterne Anwendung. Die Persistenzapplikation ist eine Applikation, die eine Programmlogik zur Speicherung von Daten auf dem Speichermedium und zum Lesen der gespeicherten Daten beinhaltet. Die Hauptapplikation ist ebenfalls der ersten Sicherheitsdomäne zugeordnet und beinhaltet eine Schnittstelle zu einer chipkartenexternen Anwendung und beinhaltet eine weitere Schnittstelle zum Austausch der Daten mit der Persistenzapplikation. Die Hauptapplikation beinhaltet eine Programmlogik zur Verarbeitung der Daten. Diese Programmlogik ist dazu konfiguriert, bereits verarbeitete Daten zur Speicherung auf dem Speichermedium über die weitere Schnittstelle an die Persistenzapplikation zu übermitteln und zu verarbeitende Daten über die weitere Schnittstelle von der Persistenzapplikation zu empfangen.

Dies kann vorteilhaft sein, da mit den vorgenannten Merkmalen eine grundsätzliche Trennung einer Applikation, die bisher ohne Datenverlust nicht aktualisiert werden konnte, in eine Applikation rein für die Datenhaltung (mit nur geringer eigener Programmfunktion) und zumindest eine weitere Applikation für die eigentlichen datenverarbeitenden Funktionen (Nutzcode) ermöglicht wird. Dadurch ist es möglich, selektiv nur die veralteten Programmfunktionen durch neue Versionen zu ersetzen, ohne dass dabei wertvolle Daten verloren gehen, da die Daten (zum Beispiel Nutzerdaten, kryptographische Schlüssel) ja von einer anderen Applikation (Persistenzapplikation) verwaltet werden. Da die Funktionalität der Persistenzapplikation sehr eingeschränkt ist, sollte es problemlos möglich sein, die Persistenzapplikation so zu programmieren, dass ein Update der Persistenzapplikation während der zu erwartenden Lebenszeit der Chipkarte nicht notwendig ist. Somit kann bei Bedarf durch Austausch der Hauptapplikation ein Update des relevanten Programmcodes durchgeführt werden, ohne dass die von einer veralteten Applikationsversion verwalteten Daten während des Updates gelöscht und überschrieben werden. Dadurch, dass sowohl Hauptapplikation als auch Persistenzapplikation der gleichen Sicherheitsdomäne angehören, wird sichergestellt, dass nur die Hauptapplikation Zugriff auf die von der Persistenzapplikation verwalteten Daten hat, nicht jedoch eine Applikation einer anderen Sicherheitsdomäne bzw. eines anderen Softwareherstellers. Zum Beispiel kann es sich bei der Sicherheitsdomäne um die Sicherheitsdomäne eines Softwareherstellers handeln, der sowohl die Persistenzapplikation als auch die Hauptapplikation bereitgestellt hat. Die häufige Durchführung von Programmupdates und bug-fixes wird somit erheblich erleichtert und die Sicherheit der Chipkarte insgesamt erhöht, da veraltete Programmversionen ein Einfallstor für Angriffe unberechtigter Dritter darstellen können.

Der Austausch der Daten mit der Persistenzapplikation über die weitere Schnittstelle kann nach Ausführungsformen zum Beispiel dadurch erfolgen, dass die Hauptapplikation Methoden von Klassen- und Interface- Objekten der Persistenzapplikation aufruft und dabei die zu speichernden Daten als Argument übergibt. Ein Beispiel für derartige Interfaceobjekte ist die Systeminterfaceklasse "Sharable" gemäß der Java Card API. Die Sicherheitsdomäne stellt dabei sicher, dass Methodenaufrufe nur durch Klassen und Applikationen erfolgen können, die der gleichen Sicherheitsdomäne angehören wie das Applikationsprogramm, das die aufgerufene Methode beinhaltet.

Nach Ausführungsformen handelt es sich bei der Chipkarte um eine Chipkarte, die der "GlobalPlatform" Spezifikation entspricht. Die GlobalPlatform Spezifikation ist ein Standard für das Management der Infrastruktur einer Chipkarte. Das Management umfasst die Installation, das Entfernen von Anwendungen und zusätzliche Verwaltungsaufgaben auf einer Karte. Hauptverantwortlich dafür ist der Kartenherausgeber, der die volle Kontrolle über den Karteninhalt hat, aber es zusätzlich auch anderen Institutionen erlauben kann, ihre eigenen Anwendungen zu verwalten. Diese Verwaltung kann z.B. durch Anwendung kryptographischer Protokolle in sicherer Weise ermöglicht werden. Die GlobalPlatform Spezifikation erlaubt es dem Kartenherausgeber, seine eigenen geschützten Bereich auf der Karte anzulegen, der auch als "Sicherheitsdomäne" bekannt ist, sowie weitere Bereiche für die Applikationen anderer Applikationsentwickler. Somit kann eine Multi-Applikations-Smartcard bereitgestellt werden.

Nach Ausführungsformen bilden die Hauptapplikation und die Persistenzapplikation eine funktionale Einheit, die in ihrer Gesamtheit eine einzige Chipkartenapplikation (mit integrierter Persistenzverwaltung und Funktionslogik) funktional ersetzt. Die funktionale Ersetzung kann darin bestehen, dass die Gesamtheit aus Hauptapplikation und Persistenzapplikation die gleiche Funktionalität beinhaltet wie die besagte einzige Chipkartenapplikation, wobei Programmlogik zum Lesen und Speichern der Daten vollständig in die Persistenzapplikation verlagert wurden und wobei Programmlogik zur Verarbeitung der Daten gemäß der eigentlichen Geschäftslogik der Chipkartenapplikation vollständig in die Hauptapplikation verlagert wurde.
Dies kann vorteilhaft sein, da eine Chipkarte mit der besagten Hauptapplikation und der Persistenzapplikation funktional identisch ist zu einer Chipkarte, in welcher beide Funktionalitäten in Form einer einzigen Chipkartenapplikation realisiert sind, sich aber im Gegensatz zu dieser ohne Datenverlust sehr leicht updaten lässt. Die "funktionale Ersetzung" der einzigen Chipkartenapplikation kann nach Ausführungsformen dadurch realisiert sein, dass von vorneherein die Hauptapplikation und die Persistenzapplikation anstatt der einzigen Chipkartenapplikation auf der Chipkarte installiert werden, oder dadurch, dass im Zuge eines Updateprozesses die einzige Chipkartenapplikation durch eine Kombination aus der Hauptapplikation und der Persistenzapplikation ersetzt wird. Dabei gehen zwar die Nutzdaten einmalig verloren, doch bei jedem folgenden Updateprozess bleiben die Daten erhalten.

Nach Ausführungsformen ist in dem Speichermedium der Chipkarte ein vom Hersteller oder Herausgeber der Chipkarte bereitgestellter Signaturprüfschlüssel gespeichert. Der Signaturprüfschlüssel kann also z.B. ab dem Zeitpunkt der Herstellung, Herausgabe oder Personalisierung der Chipkarte in dem Speichermedium gespeichert sein. Die Hauptapplikation beinhaltet eine Signatur. Die Chipkarte ist dazu konfiguriert, im Zuge eines Updates der Hauptapplikation eine bereits installierte Version der Hauptapplikation nur dann durch eine neue Version der Hauptapplikation zu ersetzen, wenn eine Prüfung der Signatur der neuen Version der Hauptapplikation durch den Signaturprüfschlüssel ergibt, dass die Signatur der neuen Version valide und vertrauenswürdig ist. Beispielsweise kann die Signatur als vertrauenswürdig angesehen werden, wenn die Signaturprüfung belegt, dass der Herausgeber der neuen Version einer Hauptapplikation identisch ist zu dem Herausgeber der alten, aktuell auf der Chipkarte installierten, Version der Hauptapplikation. Dies kann vorteilhaft sein, da dadurch sichergestellt wird, dass Hauptapplikationen nur durch neue Versionen ersetzt werden können, wenn die neuen Versionen von einer vertrauenswürdigen Quelle bereitgestellt wurden, also beispielsweise von der gleichen Instanz, die bereits die aktuell auf der Chipkarte installierte Version der Hauptapplikation bereitgestellt hat. Vorzugsweise ist der Signaturprüfschlüssel geschützt gespeichert, sodass sichergestellt werden kann, dass der Signaturprüfschlüssel nicht durch Dritte gelöscht oder durch einen anderen Schlüssel ersetzt werden kann.

Nach Ausführungsformen umfasst die Persistenzapplikation ausschließlich Programmlogik für die folgenden Aufgaben: die Speicherung der Daten auf dem Speichermedium der Chipkarte, das Lesen der gespeicherten Daten von dem Speichermedium und der Austausch der Daten über die weitere Schnittstelle mit der Hauptapplikation. Dies kann vorteilhaft sein, da die besagten Aufgaben relativ einfach und klar umrissen sind, sodass mit der Notwendigkeit eines Updates der Persistenzapplikation während der normalen Lebenserwartung einer Chipkarte im Regelfall nicht gerechnet werden muss.

Die Hauptapplikation umfasst vorzugsweise ausschließlich Programmlogik für die folgenden Aufgaben: den Austausch von Daten mit der externen Anwendung und/oder mit weiteren externen Anwendungen, den Austausch der Daten mit der Persistenzapplikation; und die Verarbeitung der Daten. Dies kann vorteilhaft sein, da die besagten Aufgaben komplex sein können, sodass eine erhöhte Wahrscheinlichkeit besteht, dass die Hauptapplikation aufgrund von Änderungen in der Geschäftslogik oder wegen bekannt gewordener Sicherheitslücken von Datenaustauschprotokollen aktualisiert werden muss. Ein Update der Hauptapplikation betrifft jedoch nicht die von der Hauptapplikation verarbeiteten Daten.

Nach Ausführungsformen ist die Persistenzapplikation frei von einer APDU Schnittstelle. Dadurch kann die Persistenzapplikation gegen Zugriff durch jegliche chipkartenexterne Anwendung geschützt werden. Die Hauptapplikation kann dagegen über APDU Schnittstelle verfügen, z.B. um Daten mit chipkartenexternen Anwendungen austauschen zu können.

Nach Ausführungsformen sind die Persistenzapplikation und die Hauptapplikation als Java-Card Applikationen ausgebildet.

Nach Ausführungsformen wird die Zugehörigkeit der in der Chipkarte installierten Applikationen zu einer oder mehreren der Sicherheitsdomänen durch die Chipkarte gemäß des GlobalPlatform Standards verwaltet. Ein Ersetzen der auf der Chipkarte installierten Applikationen im Zuge eines Updateprozesses wird durch die Chipkarte gemäß des GlobalPlatform Standards umgesetzt. Dies kann vorteilhaft sein, da Ausführungsformen der Erfindung mit den bestehenden Standards, insbesondere mit dem GlobalPlatform Standard, kompatibel sind, sodass nicht auf spezielle, nichtstandardkonforme und in der Regel teure Chipkartenversionen mit entsprechenden Lesegeräten zurückgegriffen werden muss.

Nach Ausführungsformen ist die erste Sicherheitsdomäne eine Sicherheitsdomäne des Herausgebers der Chipkarte. Alternativ dazu ist die erste Sicherheitsdomäne eine Sicherheitsdomäne des Herausgebers der Persistenzapplikation und der Hauptapplikation. Nach Ausführungsformen werden also die Persistenzapplikation und die Hauptapplikation vom gleichen Applikationsanbieter bereitgestellt.

In einem weiteren Aspekt betrifft die Erfindung einen Nachladeautomaten. Der Nachladeautomat beinhaltet eine Update-Anwendung, eine Schnittstelle zu einer Chipkarte nach einer der hier beschriebenen Ausführungsformen und einen mechanischen Einzug zur Aufnahme der Chipkarte. Die Schnittstelle ist als kontaktehaftete oder kontaktlose Schnittstelle ausgebildet. Die Update-Anwendung ist dazu konfiguriert, die neue Version der Hauptapplikationen auf die Chipkarte in einem Updateverfahren über die besagte Schnittstelle des Nachladeautomaten zu übertragen und zu installieren. Der mechanische Einzug ist dazu ausgebildet, während der Durchführung des Updateverfahrens die Chipkarte so lange vor einem Entfernen aus dem Nachladeautomaten zu schützen, bis das Updateverfahren abgeschlossen ist.
Dies kann vorteilhaft sein, da der mechanische Einzug des Nachladeautomaten dafür sorgen kann, dass der Nutzer das Updateverfahren nicht durch Herausziehen der Karte versehentlich vorzeitig beendet und die Karte in einen inkonsistenten Zustand versetzt, in welchem die Hauptapplikation möglicherweise nicht ausführbar ist, da manche Applikationskomponenten noch nicht geladen wurden. Die Bereitstellung von Nachladeautomaten kann zum Beispiel für Firmen und Flughäfen vorteilhaft sein, die aus Sicherheitsgründen dafür sorgen müssen, dass zum Beispiel sicherheitsrelevante Applikationen auf einer Chipkarte der Mitarbeiter hinsichtlich der Daten wie auch hinsichtlich der Programmlogik immer auf dem aktuellsten Stand sind.

Nach Ausführungsformen ist der Nachladeautomat als Terminal ausgebildet, welches der Zutrittskontrolle im Hinblick auf ein bestimmtes Gebiet oder Gebäude oder der Zugriffskontrolle im Hinblick auf eine bestimmte Hardwarefunktionalität (Drucken, Aktivierung einer Maschine, z.B. eines Fahrzeugs, etc.) oder Softwarefunktionalität (Durchführung einer sicherheitskritischen Programm- oder Steuerungsroutine, z.B. im Bereich der Überwachung von Kraft- und Wasserwerken) dient. Eine regelmäßige Prüfung, ob eine bestimmte Applikation der Chipkarte noch aktuell ist, kann z.B. automatisch im Zuge einer Authentifizierung eines Nutzers gegenüber dem Nachladeautomaten erfolgen, wobei die Authentifizierung dazu dient, dem Nachladeautomaten gegenüber nachzuweisen, dass der Nutzer, dem die Chipkarte zugehörig ist, zum Zutritt auf den geschützten geographischen Bereich oder zum Zugriff auf die geschützte Funktionalität berechtigt ist.

Beispielsweise kann die Hauptapplikation mit einer Versionsnummer versehen sein, die von dem Nachladeautomaten eingesehen oder abgefragt werden kann. Der Nachladeautomat kann über eine Version der Hauptapplikation verfügen, welche ebenfalls eine Versionsnummer besitzt, die anzeigt, dass die Version der Hauptapplikation aktueller ist als die Version, die derzeit auf der Chipkarte installiert ist. Im Zuge der Authentifizierung des Nutzers gegenüber dem Nachladeautomaten zum Zwecke des Zutritts oder Zugriffs auf den geschützten Bereich bzw. die geschützte Funktion frägt der Nachladeautomat automatisch die Version der aktuell auf der Chipkarte des Nutzers gespeicherten Hauptapplikation ab und vergleicht diese mit der Versionsnummer der Version der Hauptapplikation, die von dem Nachladeautomaten verwaltet wird. Beispielsweise kann es sich bei dieser Version um die aktuellste derzeit verfügbare Version der Hauptapplikation handeln. Bei Nicht-Identität der verglichenen Versionsnummern führt der Nachladeautomat automatisch ein Update der Hauptapplikation durch, wie für Ausführungsformen der Erfindung beschrieben.

Beispielsweise kann von einer bestimmten Version einer Hauptapplikation bekannt sein, dass sie eine Sicherheitslücke enthält oder eine Fehlfunktion aufweist. In diesem Fall kann z.B. eine Update-Applikation und/oder ein Update-Terminal durch Vergleich der Versionsnummer einer auf einer Chipkarte installierten HauptApplikation mit einer Liste an Versionsnummern, für die bekannt ist dass sie veraltete, fehlerhafte und/oder unsichere Versionen der Hauptapplikation darstellen, feststellen, ob eine Hauptapplikation veraltet, fehlerhaft und/oder unsicher ist und durch eine neue Version ersetzt werden sollte.

Alternativ kann auch durch entsprechende Testroutinen festgestellt werden, ob eine Hauptapplikation fehlerhaft, unsicher oder veraltet ist. Die Art der Testroutine hängt stark von der Art der zu prüfenden Hauptapplikation ab. Falls die Hauptapplikation beispielsweise eine Applikation zur Ausgabe personenbezogener Daten ist, wobei bei "normaler" Nutzung bestimmte Inhalte aus Datenschutzgründen in modifizierter Form ausgegeben werden sollen (z.B. "ausixen" der ersten 5 Ziffern der auf der Chipkarte gespeicherten Kreditkartennummer), könnte die Testroutine prüfen ob die ersten 5 Ziffern einer von der Hauptapplikation abgefragten und ausgegebenen Kontonummer auch wirklich wie erwartet modifiziert wurde.

Auch könnte z.B. die Hauptapplikation in verschiedenen Versionen bei verschiedenen Nutzern vorliegen, wobei die Hauptapplikation eine Authentifizierung durch den jeweiligen Nutzer erfordert bevor dieser Daten von der Hauptapplikation abfragen oder in diese eingeben darf. Die ältere, unsichere Version dieser Hauptapplikation kann ein veraltetes, Passwort-basiertes Authentifizierungsverfahren vorsehen während die neuere, sichere Version der Hauptapplikation ein auf biometrischen Daten basierendes Authentifizierungsverfahren vorsieht. Die Testroutine kann im Zuge einer Testauthentifizierung eine Zufallszahl als Authentifizierungsdatum an die Hauptapplikation übermitteln. Falls die Hauptapplikation eine Fehlermeldung zurückgeht, aus der hervorgeht dass die Zufallszahl ein inkorrektes Passwort darstellt, kann die Testroutine bzw. dass diese ausführende Terminal feststellen, dass die Hauptapplikation in der unsicheren Version vorliegt. Falls die Hauptapplikation eine Fehlermeldung zurückgibt dass die Zufallszahl nicht einem bestimmten, erwarteten biometrischen Datentyp (z.B. Fingerabdruck, Stimmprofil, Irisprofil, etc.) entspricht, kann die Testroutine bzw. das diese ausführende Terminal feststellen dass die Hauptapplikation in der neuen, sicheren Version vorliegt.

Eine Hauptapplikation ist eine Applikation. Bei der Hauptapplikation kann es sich nach Ausführungsformen um eine Applikation handeln, die sicherheitskritische Kontrollkommandos an chipkartenexterne Hardware- oder Softwarekomponenten sendet oder dem Nutzer Zugriff zu den besagten chipkartenexterne Hardware- oder Softwarekomponenten verschafft. Bei den chipkartenexternen Hardware- oder Softwarekomponenten kann es sich z.B. um Steuerlogik für Kraftfahrzeuge, Maschinen, Flugzeuge, Produktionsstraßen oder Kraftwerke handeln. Es kann sich auch um elektronische Verriegelungsmechanismen handeln, die z.B. in einer Tür oder einer Schließanlage eingebaut sind und mit der Hauptapplikation Daten austauschen, sodass sich der Nutzer mittels der ausgetauschten Daten als berechtigt ausweisen kann, die Tür bzw. den Schließmechanismus zu öffnen. Bei den ausgetauschten Daten kann es sich z.B. um biometrische Daten des Nutzers handeln, die von der Persistenzapplikation gespeichert und verwaltet werden und die von der Hauptapplikation an die Tür- oder Schließanlage übermittelt werden, z.B. über eine NFC ("near field communication") Schnittstelle. Der Austausch kann z.B. mittels eines kryptographischen Protokolls erfolgen, wobei der von der Chipkarte auszuführende Teil des kryptographischen Protokolls in der Hauptapplikation implementiert ist. Dies hat den Vorteil, dass es ohne weiteres möglich ist, ein kryptographisches Protokoll zur Übermittlung sensibler Daten, z.B. biometrischer oder anderweitiger personenbezogener Daten, durch ein anderes, aktuelleres Protokoll zu ersetzen. Viele kryptographische Protokolle, die einst als sehr sicher galten, sind aufgrund des rasanten Zuwachses an Rechenleistung gängiger Prozessoren heute als nicht mehr sicher anzusehen. Es ist auch für die Zukunft zu erwarten, dass kryptographische oder andere sicherheitsrelevante Protokolle nach einigen Jahren keinen optimalen Schutz mehr bieten und daher ersetzt werden müssen. Dadurch, dass die nutzerspezifischen Daten, z.B. biometrische Daten, selektiv von der Persistenzapplikation verwaltet und gespeichert werden und dadurch, dass die Programmlogik zur Durchführung kryptographischer Protokolle zum sicheren Austausch dieser nutzerspezifischen Daten mit den chipkartenexternen Hardware- oder Softwarekomponenten selektiv von der Hauptapplikation bereitgestellt wird, ist es möglich, die kryptographischen Protokolle durch regelmäßige, automatische Updates (z.B. bei der täglichen Authentifizierung des Nutzers gegenüber einem Zugriffskontrollterminal, das gleichzeitig als Nachladeautomat dient) immer auf dem aktuellen Stand zu halten. Somit können die Protokolle auf einfache Weise aktuell gehalten werden um höchsten Sicherheitsstandards zu genügen, ohne jedes Mal die personenbezogenen Daten des Nutzers neu erheben zu müssen.

Nach Ausführungsformen beinhaltet ausschließlich die Hauptapplikation, nicht die Persistenz-Applikation Programmlogik zum Austausch von Daten mit der externen Anwendung und/oder mit weiteren externen Anwendungen, wobei diese Programmlogik die chipkartenseitigen Schritte eines Authentifizierungsprotokolls, insbesondere eines kryptographischen Authentifizierungsprotokolls beinhalten, wobei die Programmlogik zum Austausch der Daten einen Austausch von Nutzdaten, z.B. personenbezogenen Daten des Nutzers der Chipkarte, nur dann erlaubt wenn sich die externe Anwendung bzw. das Terminal, z.B. das Updateterminal oder ein übliches Anwendungsterminal, erfolgreich gegenüber der Hauptapplikation authentifiziert hat. Beispielsweise durch Beweis, dass die externe Applikation über ein Geheimnis, z.B. einen bestimmten privaten kryptographischen Schlüssel, verfügt. Die Programmlogik zum Austausch von Daten und insbesondere die darin spezifizierte Authentifizierungslogik können also komplex sein und fehlerhaft, veraltet oder unsicher sein oder geworden sein, etwa durch Verwendung eines Verschlüsselungsalgorithmus der auf der Generierung von Schlüsseln beruht die angesichts der Rechenleistung moderner Rechner nicht mehr als hinreichend sicher gelten. Oder weil eine Sicherheitslücke im Authentifizierungsalgorithmus bekannt geworden ist. Eine veraltete, fehlerhafte und/oder unsichere Authentifizierungslogik kann hier jedoch einfach durch eine neue Version der Hauptapplikation ersetzt werden. Auch wenn also die Geschäftslogik der Hauptapplikation selbst aktuell, sicher und korrekt ausgeführt wird, kann der Umstand, dass sämtliche Funktionen die den Datenaustausch zwischen der Geschäftsfunktionalität der Hauptapplikation und chipkartenexternen Anwendungen durch die Hauptapplikation geregelt werden, vorteilhaft sein, da auch diese Funktionen auf einfachem Wege aktualisiert werden können ohne dass Nutzdaten dadurch betroffen sind, da die Persistenzapplikation ja keine Programmlogik für den Datenaustausch mit externen Applikationsprogrammen beinhaltet.

In einem weiteren Aspekt betrifft die Erfindung ein Verfahren. Das Verfahren umfasst:
- Bereitstellung einer Chipkarte, wobei die Chipkarte einen Prozessor und ein nicht-flüchtiges Speichermedium beinhaltet, wobei die Chipkarte so konfiguriert ist, dass auf dem Speichermedium installierte Applikationen, die nicht zur gleichen Sicherheitsdomäne gehören, voneinander isoliert sind;
- Installation einer Persistenzapplikation, welche einer ersten Sicherheitsdomäne zugeordnet ist und geschützt ist gegen Zugriff durch jegliche chipkartenexterne Anwendung, auf dem Speichermedium der Chipkarte, wobei die Persistenzapplikation eine Programmlogik zur Speicherung von Daten auf dem Speichermedium und zum Lesen der gespeicherten Daten beinhaltet;
- Installation einer Hauptapplikation, welche der ersten Sicherheitsdomäne zugeordnet ist und eine Schnittstelle zu einer chipkartenexternen Anwendung und eine weitere Schnittstelle zum Austausch der Daten mit der Persistenzapplikation beinhaltet, auf dem Speichermedium der Chipkarte, wobei die Hauptapplikation eine Programmlogik zur Verarbeitung der Daten beinhaltet, die so konfiguriert ist, dass bereits verarbeitete Daten zur Speicherung auf dem Speichermedium über die weitere Schnittstelle an die Persistenzapplikation übermittelt werden und dass zu verarbeitende Daten über die weitere Schnittstelle von der Persistenzapplikation empfangen werden. Beispielsweise kann die Hauptapplikation Daten, die von der Hauptapplikation verarbeitet wurden, über die weitere Schnittstelle an die Persistenzapplikation übermitteln und/oder Daten, die von der Hauptapplikation verarbeitet werden sollen, über die weitere Schnittstelle von der Persistenzapplikation empfangen.
Dies kann vorteilhaft sein, da das Verfahren es beispielsweise dem Hersteller einer Chipkarte oder dem Herausgeber einer bestimmten Software Applikation für Chipkarten ermöglicht, von vornherein dafür zu sorgen, dass die von dem Hersteller bzw. dem Herausgeber bereitgestellten Applikationen sehr leicht und ohne Beeinträchtigung der Nutzbarkeit des Programms, insbesondere ohne Datenverlust, aktualisiert werden können.

Nach Ausführungsformen umfasst das Verfahren ferner:
- Authentifikation einer chipkartenexternen Update-Anwendung gegenüber der Chipkarte; die Persistenz-Anwendung verfügt über keine Schnittstelle, um mit der Update-Anwendung zu kommunizieren;
- Feststellung, durch die Update-Anwendung, dass die auf der Chipkarte installierte Hauptapplikation veraltet, unsicher oder fehlerhaft ist;
- Nach erfolgreicher Authentifikation, Installation einer neuen Version der Hauptapplikation in dem Speichermedium durch die Update-Anwendung, wobei die veraltete, unsichere oder fehlerhafte Version der Hauptapplikation vollständig von dem Speichermedium gelöscht wird, wobei die Persistenzapplikation und die von der Hauptapplikation verarbeiteten und die von der Persistenzapplikation gespeicherten Daten auf dem Speichermedium verbleiben.

Nach Ausführungsformen umfasst die Installation:
- Übertragung der neuen Version der Hauptapplikation durch die Update-Anwendung an die Chipkarte, wobei die neue Version der Hauptapplikation eine Signatur beinhaltet;
- Empfang der neuen Version der Hauptapplikation durch die Chipkarte;
- Prüfung der Signatur durch den Prozessor der Chipkarte mittels eines vor Herausgabe der Chipkarte in dem Speichermedium gespeicherten Signaturprüfschlüssels, wobei die Installation der neuen Version der Hauptapplikation und das Löschen der veralteten, unsicheren oder fehlerhaften Version der Hauptapplikation nur dann erfolgt, wenn die Prüfung ergibt, dass die Signatur valide und vertrauenswürdig ist.

Nach Ausführungsformen umfasst die Installation eine Durchführung einer Funktionsprüfung der installierten neuen Version der Hauptapplikation. Das Löschen der veralteten, unsicheren oder fehlerhaften Version der Hauptapplikation erfolgt nur dann, wenn die Funktionsprüfung ein Funktionieren der neuen Version der Hauptapplikation ermittelt, wobei im Falle eines ermittelten Nicht-Funktionierens die neue Version der Hauptapplikation von dem Speichermedium entfernt wird und das Löschen der veralteten, unsicheren oder fehlerhaften Version der Hauptapplikation unterbleibt. Die Funktionsprüfung kann z.B. durch die Update-Anwendung erfolgen.

Nach Ausführungsformen authentifiziert sich die Chipkarte gegenüber der chipkartenexternen Update-Anwendung. Nach gegenseitiger Authentifikation der Chipkarte und der Update-Anwendung, erfolgt ein Aufbauen einer geschützten Kommunikationsverbindung zwischen der Chipkarte und der Update-Anwendung. Die neue Version der Hauptapplikation wird über den sicheren Kommunikationskanal übermittelt. Die neue Version der Hauptapplikation ist frei von Nutzdaten. Unter "Nutzdaten" sind hier Daten zu verstehen, die als Input für eine bestimmte Applikation dienen, als Output der Applikation zurückgegeben werden oder zumindest von der Applikation verwaltet werden. Nutzdaten sind also - im Gegensatz zu ausführbarer Programmlogik - vorzugsweise nichtausführbare Daten, z.B. nutzerbezogene oder applikationsbezogene Daten (Attribute, kryptographische Schlüssel, Gesundheitsdaten, Berechtigungsnachweise, etc.).

Nach Ausführungsformen umfasst das Verfahren ferner:
- vor Herausgabe der Chipkarte, Vereinbarung eines geheimen Datenwerts, z.B. eines symmetrischen kryptographischen Schlüssels, zwischen der Chipkarte und einer Update-Anwendung. Bei der Update-Anwendung handelt es sich um eine chipkartenexterne Applikation, die zum Erkennen und/oder Updaten einer veralteten, fehlerhaften oder unsicheren Version der auf der Chipkarte installierten Hauptapplikation ausgebildet ist. Bei dem geheimen Datenwert kann es sich z.B. um einen geheimen kryptographischen Schlüssel handeln.
- Speichern des geheimen Datenwerts sowohl im Speichermedium der Chipkarte als auch in einem chipkartenexternen Speicher, der der Update-Anwendung zugänglich ist. Auch die Speicherung erfolgt vorzugsweise vor oder unmittelbar nach Herausgabe der Chipkarte.

Nach gegenseitiger Authentifikation der Chipkarte und der Update-Anwendung und nach Feststellung durch die Update-Anwendung, dass die auf der Chipkarte installierte Hauptapplikation veraltet, unsicher oder fehlerhaft ist, wird folgendes Verfahren durchgeführt:
- Berechnung eines MAC-Werts ("message authentication code") einer neuen Version der Hauptapplikation durch die Update-Anwendung unter Verwendung des auf dem chipkartenexternen Speichermedium gespeicherten geheimen Wertes; Beispielsweise kann ein Hashwert der neuen Version der Applikation oder ein Hashwert eines Teils dieser neuen Version und ein kryptographischer Schlüssel als Eingabe eines MAC-Algorithmus verwendet werden um einen eindeutigen MAC Wert für diese Version zu berechnen. Bei dem kryptographischen Schlüssel kann es sich um den auf dem chipkartenexternen Speichermedium gespeicherten geheimen Wert handeln;
- Übertragung des berechneten MAC-Werts von der Update-Anwendung an die Chipkarte;
- Übertragung der neuen Version der Hauptapplikation durch die Update-Anwendung an die Chipkarte;
- Berechnung eines weiteren MAC-Werts der übertragenen neuen Version durch die Chipkarte unter Verwendung des auf dem Speichermedium der Chipkarte gespeicherten geheimen Wertes; Beispielsweise kann die Chipkarte über den gleichen MAC Algorithmus verfügen wie die Update-Anwendung und einen Hashwert der neuen Version der Applikation oder ein Hashwert eines Teils dieser neuen Version und einen kryptographischen Schlüssel als Eingabe dieses MAC-Algorithmus verwenden um den weiteren MAC Wert zu berechnen. Bei dem kryptographischen Schlüssel kann es sich um den auf dem Speichermedium der Chipkarte gespeicherten geheimen Wert handeln;
- Vergleich des übertragenen MAC-Werts mit dem weiteren MAC-Wert durch die Chipkarte; Zusätzlich zu dem MAC-Wert kann auch der geheime Wert von der Update-Anwendung an die Chipkarte übertragen werden (vorzugsweise in geheimer Form, also z.B. verschlüsselt oder über ein Schlüsselaustauschverfahren) oder der geheime Wert wurde schon vorab, z.B. vor der Herausgabe der Chipkarte, zwischen der Update-Applikation und der Chipkarte vereinbart, z.B. indem der Chipkartenherausgeber einen entsprechenden Schlüssel vorab auf der Chipkarte speichert;
- Installation der neuen Version der Hauptapplikation in dem Speichermedium und Entfernen der veralteten, unsicheren oder fehlerhaften Version der Hauptapplikation von dem Speichermedium nur im Falle der Identität der verglichenen MAC-Werte.

In manchen Ausführungsformen erfolgt die Installation der neuen Version und das Entfernen der veralteten Version nur dann, wenn sowohl der übertragene MAC Wert als auch der übertragene geheime Wert mit der lokalen Kopie auf dem Nachladeautomaten übereinstimmen. Die Übereinstimmung beider Werte interpretiert die Update-Applikation als erfolgreichen Integritätstest: Der geheime Wert und der MAC Wert wurde von einer Chipkarte abgeschickt, die den vereinbarten geheimen Wert kennt, und sie wurde während der Übertragung nicht verändert.

Nach Ausführungsformen stellt der Nachladeautomat fest, dass eine auf der Chipkarte bereits installierte Applikation veraltet und/oder unsicher ist. Die Feststellung kann zum Beispiel in Antwort darauf erfolgen, dass ein Nutzer die Chipkarte in einen mechanischen Einzug des Nachladeautomaten einführt. Der Nachladeautomat, z.B. mittels einer auf dem Nachladeautomat installierten Update-Anwendung, deinstalliert die bereits installierte Applikation und führt die Installation der Hauptapplikation und der Persistenzapplikation durch, wobei die Gesamtheit der Hauptapplikation und der Persistenzapplikation einen funktionalen Ersatz der deinstallierten Applikation darstellt. Das bedeutet, sämtliche Funktionen der einen veralteten und mittlerweile deinstallierten Applikation werden in identischer oder veränderter (insbesondere verbesserter) Form von der Gesamtheit aus Hauptapplikation und Persistenzapplikation ebenfalls bereitgestellt mit dem Unterschied, dass Applikationsupdates (der Hauptapplikation) in der Zukunft ohne Verlust der Nutzdaten (z.B. auf der Chipkarte gespeicherte Attribute des Nutzers, z.B. Name, Adresse, Geburtstag, biometrische Daten, kryptographische Schlüssel, etc.) durgeführt werden können.

### Kurzbeschreibung der Figuren

Ausführungsformen der Erfindung sind in den anhängenden Zeichnungen veranschaulicht. Darin zeigen:
- Figur 1: ein Blockdiagramm einer Chipkarte bevor die Hauptapplikation und die Persistenzapplikation installiert wurden;
- Figur 2: ein Blockdiagramm der Chipkarte nachdem die Hauptapplikation und die Persistenzapplikation installiert wurden,
- Figur 3: ein Flussdiagramm einer Ausführungsform eines erfindungsgemäßen Verfahrens; und
- Figur 4: ein Blockdiagramm eines Nachladeautomaten.

### Ausführliche Beschreibung

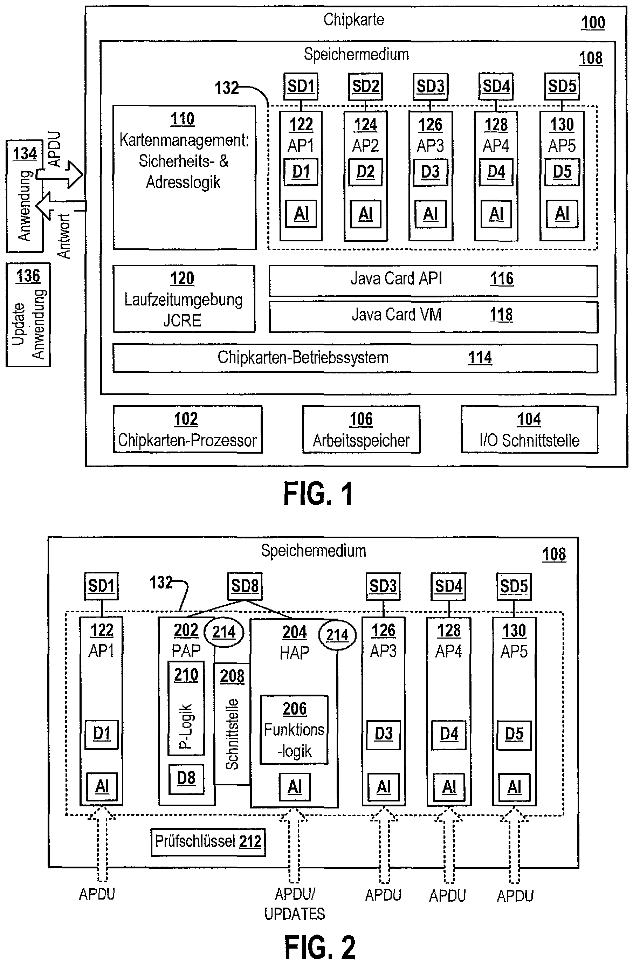

Die Figur 1 zeigt eine Chipkarte 100, auf welcher zum abgebildeten Zeitpunkt noch keine Persistenz- oder Hauptapplikation installiert ist. Die Chipkarte besitzt einen Prozessor 102 und ein nicht-flüchtiges Speichermedium 108. Der Prozessor dient der Speicherverwaltung und der Ausführung einer Vielzahl 132 von Applikationen AP1-AP5, die auf dem Speicher 108 der Chipkarte installiert sind. Der Speicher 108 kann z.B. aus einem ROM und einem EEPROM bestehen. Im ROM ist das Betriebssystem der Karte abgelegt. Im EEPROM werden Benutzerdaten D1-D5 und Applikationen AP1-AP5 abgelegt. Die Chipkarte kann ferner über Arbeitsspeicher 106 verfügen, z.B. RAM, welcher flüchtig ist und die gerade verarbeiteten Daten und aktuell ausgeführte Applikationen beinhaltet.

Jede der Applikationen AP1-AP5, die in Fig. 1 abgebildet sind, ist einer Sicherheitsdomäne SD1-SD5 zugeordnet, verwaltet einen bestimmten Satz an Daten D1-D5 und verfügt über eine Schnittstelle Al zu einer chipkartenexternen Anwendung, z.B. der Anwendung 134, die z.B. auf einem Lesegerät, Nutzer-Computersystem oder Terminal installiert sein kann. So verwaltet, verarbeitet und speichert Applikation AP1, die der Sicherheitsdomäne SD1 angehört, beispielsweise die Daten D1. Die Applikation AP2, die der Sicherheitsdomäne SD2 angehört, verarbeitet und speichert beispielsweise die Daten D2 und so weiter. Die Applikationsprogramme sind voneinander isoliert, d.h., Applikationsprogramm AP1 kann zwar auf seine Daten D1 lesend und schreibend zugreifen, nicht jedoch auf die Daten D2, da diese zu einer anderen Applikation AP2 gehören. Die Isolation von Applikationen einer Chipkarte bedeutet also eine Verhinderung des Zugriffs einer Applikation auf die Daten und/oder Funktionen der anderen Applikation.

Die Laufzeitumgebung 120 stellt die Infrastruktur für die Ausführung der Applikationen 132 bereit. Die Laufzeitumgebung kann z.B. als JCRE ("Java Card Runtime Environment") implementiert sein. Nach Ausführungsformen beinhaltet die Laufzeitumgebung weitere Komponenten, die eine GlobalPlatform Laufzeitumgebung bereitstellen. Auch das Betriebssystem 114 der Chipkarte, z.B. Java Card, und eine Virtuelle Maschine VM können Teile der Laufzeitumgebung stellen.

Das Programmmodul 110 ist eine zentrale Komponente einer Chipkarte, die der Verwaltung und Kontrolle verschiedener Funktonen der Chipkarte dient. Das Modul führt Dienste und Applikationen im Hintergrund aus, die zumindest teilweise von Applikationen der Chipkarte über eine interne Schnittstelle, z.B. eine Java Card API 116, aufgerufen werden können. Chipkartenexterne Anwendungen 134 können zumindest manche dieser Dienste über APDU Kommandos aufrufen. Das Programmodul 110 verwaltet außerdem die Sicherheitsdomäne des Herausgebers der Chipkarte.
Beispielsweise kann das Modul 110 als "Kartenmanager" einer Chipkarte gemäß der GlobalPlatform Spezifikation ausgebildet sein. Der Kartenmanager ist die zentrale Komponente einer GlobalPlatform-Karte. Jeder Dienst wird von ihm kontrolliert. Die interne Schnittstelle zwischen dem Kartenmanager 110 und den Diensten und Applikationen kann hier als GlobalPlatform API ausgebildet sein. Kartenexterne Anwendungen können auf manche der von dem Kartenmanager 110 verwalteten Dienste und Applikationen mittels APDUs zugreifen.

Applikationen 132, die nicht zur gleichen Sicherheitsdomäne SD1-SD5 gehören, sind voneinander isoliert, d.h., können nicht auf die Daten der anderen Applikationen zugreifen oder Funktionen dieser anderen Applikationen aufrufen. Eine Update-Anwendung 136 kann z.B. in einem Terminal, Nutzer-Computersystem oder einem Server installiert sein. Sie kann dazu verwendet werden, einzelne Applikationen AP1-AP5 von der Chipkarte zu deinstallieren und neu zu installieren, wobei die neu installierte Version eine erweiterte und/oder verbesserte bzw. korrigierte ("bug-fix") Version der deinstallierten Applikation darstellen kann. Der Vorgang der Deinstallation einer alten Version und der Installation der erweiterten und/oder verbesserten Version wird auch als "Update" einer Applikation bezeichnet. Wird das Update einer Applikation gemäß eines konventionellen Verfahrens durchgeführt, gehen dabei die von der deinstallierten Applikationsversion verwalteten Daten verloren.

**Figur 2** zeigt demgegenüber das Speichermedium 108 der Chipkarte zu einem späteren Zeitpunkt. Zu diesem Zeitpunkt wurde eine konventionelle Applikation AP2 durch eine Kombination aus einer Hauptapplikation - HAP - 204 und einer Persistenzapplikation - PAP - 202 unter Wahrung der Programmfunktionalität der konventionellen Applikation AP2 ersetzt.

Es ist auch möglich, dass die Karte schon ab dem Zeitpunkt der Herausgabe oder Personalisierung die Hauptapplikation 204 und die Persistenzapplikation 202 beinhaltet anstatt einer einzelnen Applikation, die sowohl Geschäftslogik als auch Persistenzlogik beinhaltet. Es ist also nicht notwendig, dass die Chipkarte einmal einen Zustand wie in Figur 1 dargestellt besessen hat.

Die Persistenzapplikation 202 und auch die Hauptapplikation 204 sind einer ersten Sicherheitsdomäne SD8 zugeordnet. Die Sicherheitsdomäne SD8 schützt die Persistenzapplikation und auch die Hauptapplikation gegen Zugriff durch jegliche chipkartenexterne Anwendung 134 und auch vor dem Zugriff durch andere Applikationen AP1-AP5 der Chipkarte, die anderen Sicherheitsdomänen SD1-SD5 zugewiesen sind. Die Persistenzapplikation besteht im Wesentlichen nur aus einer Programmlogik 210 zur Speicherung von Daten D8 auf dem Speichermedium 108 und zum Lesen der gespeicherten Daten.

Die Hauptapplikation 204 beinhaltet - im Gegensatz zu der Persistenzapplikation - eine Schnittstelle Al zu einer chipkartenexternen Anwendung 134 und eine weitere Schnittstelle 208 zum Austausch der Daten D8 mit der Persistenzapplikation. Die weitere Schnittstelle kann z.B. aus Java Card Klassen-basierten Funktionsaufrufen beruhen. Diese sind für Applikationen, die der gleichen Sicherheitsdomäne angehören, zulässig. Die Hauptapplikation beinhaltet eine Programmlogik 206 zur Verarbeitung der Daten D8. Bei der Programmlogik kann es sich z.B. um Geschäftslogik, kryptographische Funktionen zum Ver- und Entschlüsseln von Nutzerdaten, Protokolle zum Datenaustausch mit chipkartenexternen Anwendungen (z.B. Verwaltungssoftware von elektronischen Pässen und Gesundheitsdokumenten) beinhalten. Bei den Daten D8 kann es sich um Nutzerdaten, z.B. Nutzerattribute, kryptographische Schlüssel und Zwischenwerte, etc., handeln. Die Prorammlogik 206 ist so konfiguriert, dass Daten D8, die von der Programmlogik 206 bereits verarbeitet bzw. erzeugt oder modifiziert wurden, zur Speicherung auf dem Speichermedium 108 über die weitere Schnittstelle 208 an die Persistenzapplikation übermittelt werden. Daten, die von der Programmlogik 206 erst noch verarbeitet werden müssen, also als Input benötigt werden, werden über die weitere Schnittstelle 208 von der Persistenzapplikation angefordert und empfangen.

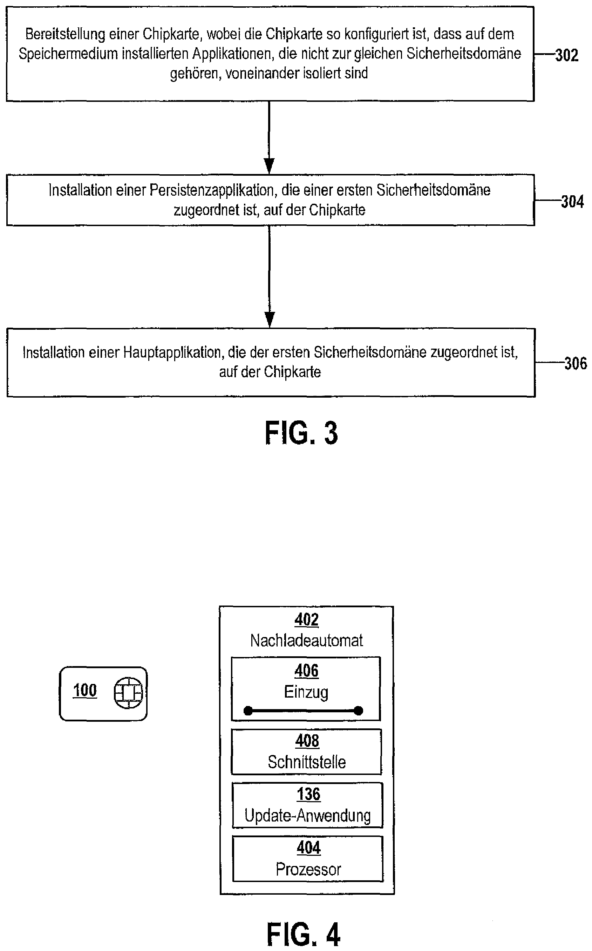

Beispielsweise kann ein Kartenhersteller vor Herausgabe der Chipkarte 100 an einen Endnutzer einen Signaturprüfschlüssel 212 in dem Speichermedium 108 speichern. Im Zuge eines Updates der Hauptapplikation überprüft die Chipkarte die Signatur der neuen Version der Hauptapplikation, die z.B. von einem Nachladeautomaten 402 wie in Fig. 4 dargestellt bereitgestellt wird. Die Signatur kann z.B. vor oder zusammen mit der neuen Version der Hauptapplikation 204 von dem Nachladeautomaten an die Chipkarte übermittelt werden. Die Signaturprüfung umfasst die Prüfung der übermittelten Signatur durch die Chipkarte mit Hilfe des in der Chipkarte gespeicherten Signaturschlüssels. Nur wenn die Prüfung der Signatur 214 durch den Signaturprüfschlüssel 212 ergibt, dass die Signatur der neuen Version valide und vertrauenswürdig ist, erlaubt die Chipkarte eine Deinstallation der alten Version der Hauptapplikation und eine Installation einer neuen Version der Hauptapplikation.

Bereits bei der Herausgabe der Chipkarte kann der Herausgeber oder Hersteller also festlegen, welche Firmen und sonstigen Organisationen, die Applikationen für Chipkarten herstellen, als hinreichend vertrauenswürdig gelten, um Applikationen bereitstellen zu dürfen, die in einer bestimmten Sicherheitsdomäne installiert werden können und auf andere Applikationen zugreifen und/oder diese ersetzen können.

Die Persistenzapplikation 202 beinhaltet beispielsweise ausschließlich Programmlogik 210 für die Speicherung der Daten D8 auf dem Speichermedium 108. Die Daten D8 können z.B. Attribute eines Nutzers sein, dem die Chipkarte zugeordnet ist. Die Attribute können z.B. von dem Nutzer eingegeben werden oder von einem Attributserver bezogen werden. Ferner kann die Programmlogik 210 für das Lesen der gespeicherten Daten von dem Speichermedium und für den Austausch der Daten D8 über die weitere Schnittstelle 208 mit der Hauptapplikation ausgebildet sein. Die Hauptapplikation 204 dagegen beinhaltet ausschließlich Programmlogik 206 für den Austausch von Daten mit einer oder mehreren externen Anwendungen 134, für den Austausch der Daten D8 mit der Persistenzapplikation und für die Verarbeitung der Daten. Bei der Hauptapplikation kann es sich z.B. um eine Applikation handeln, die Attribute des Nutzers verwaltet und diese selektiv nur an externe Anwendungen und Programme weitergibt, die sich zuvor gegenüber der Hauptapplikation als berechtigt authentifiziert haben. Die Weitergabe der Attribute, die auch biometrische Daten des Nutzers umfassen können, kann z.B. dazu dienen, einer externen Zugangskontrollanwendung 134 zu ermöglichen, zu prüfen, ob der Nutzer zum Zugang oder Zutritt zu geschützten Funktionen bzw. Zutritt zu einem geschützten Bereich erlaubt werden soll oder nicht.

Die Persistenzapplikation ist vorzugsweise gegen Zugriff durch jegliche chipkartenexterne Anwendung 134 geschützt. Sie kann also nicht gelöscht, extern kontrolliert oder einem Update unterzogen werden. Der Schutz kann z.B. darin bestehen, dass die Persistenzapplikation keine APDU Schnittstelle besitzt.

**Figur 3** ist ein Flussdiagramm, das ein Verfahren gemäß einer Ausführungsform der Erfindung darstellt. In Schritt 302 erfolgt eine Bereitstellung einer Chipkarte 100, wie diese z.B. in Figuren 1 und 2 dargestellt ist. Die Chipkarte beinhaltet einen Prozessor 102 und ein nicht-flüchtiges Speichermedium 108. Die Chipkarte ist so konfiguriert, dass auf dem Speichermedium installierten Applikationen 132, die nicht zur gleichen Sicherheitsdomäne SD1-SD5, SD8 gehören, voneinander isoliert sind, also nicht auf die Daten der jeweils anderen Applikation zugreifen können oder Methoden der anderen Applikationen aufrufen können.

In Schritt 304 folgt eine Installation einer Persistenzapplikation 202, welche einer ersten Sicherheitsdomäne SD8 zugeordnet ist und geschützt ist gegen Zugriff durch jegliche chipkartenexterne Anwendung 134 auf dem Speichermedium 108 der Chipkarte. Dieser Schritt kann z.B. von einem Nachladeterminal durchgeführt werden, wie es in Fig. 4 dargestellt ist. Die Persistenzapplikation beinhaltet eine Programmlogik 210 zur Speicherung von Daten D8 auf dem Speichermedium 108 und zum Lesen der gespeicherten Daten.

In Schritt 306, der z.B. ebenfalls von dem Nachladeautomaten durchgeführt werden kann, erfolgt eine Installation einer Hauptapplikation 204. Die Hauptapplikation ist ebenfalls der ersten Sicherheitsdomäne SD8 zugeordnet, z.B. dadurch, dass sowohl die Persistenzapplikation als auch die Hauptapplikation in einem Speicherbereit gespeichert sind, der selektiv für die Sicherheitsdomäne SD8 und deren Applikationsprogramme reserviert ist. Die Hauptapplikation beinhaltet eine Schnittstelle Al zu einer chipkartenexternen Anwendung 134 und eine weitere Schnittstelle 208 zum Austausch der Daten D8 mit der Persistenzapplikation. Die Schnittstelle AI kann z.B. den Datenaustausch mittels APDUs vorsehen. Die weitere Schnittstelle 208 kann so realisiert sein, dass die Persistenzapplikation bestimmte Methoden beinhaltet, die von anderen Applikationen der gleichen Sicherheitsdomäne, hier also der Hauptapplikation, aufgerufen werden können, wobei die Hauptapplikation Inputdaten als Argument der aufgerufenen Funktion übergeben kann und das Resultat der Funktionsausführung empfängt.
Die Hauptapplikation beinhaltet eine Programmlogik 206 zur Verarbeitung der Daten D8, die so konfiguriert ist, dass Daten D8, die bereits von der Hauptapplikation verarbeitet wurden, zur Speicherung auf dem Speichermedium 108 über die weitere Schnittstelle 208 an die Persistenzapplikation übermittelt werden. Daten, die von der Hauptapplikation erst noch verarbeitet werden sollen, also z.B. verschlüsselt und an externe Anwendungen 134 übermittelt werden sollen, empfängt die Hauptapplikation über die weitere Schnittstelle 208 von der Persistenzapplikation. Zum Beispiel kann die Hauptapplikation eine Lese-Methode der Persistenzapplikation aufrufen, wobei als Argument eine Bezeichnung der Daten übergeben wird, die gelesen werden sollen. Die Persistenzapplikation führt die aufgerufene Lese-Methode aus und liest dabei die angeforderten Daten von dem Speichermedium 108 aus. Die ausgelesenen Daten werden an die Hauptapplikation zurückgegeben.

Die Persistenzapplikation kann auch vor der Hauptapplikation oder parallel zu dieser installiert werden.

**Figur 4** zeigt eine Nachladeautomat 402 gemäß einer Ausführungsform der Erfindung. Der Nachladeautomat beinhaltet einen Prozessor 404, eine Update-Anwendung 136, eine Schnittstelle 408 zu einer Chipkarte 100 nach einer der hier beschriebenen Ausführungsformen und einen mechanischen Einzug 406 zur Aufnahme der Chipkarte.

Die Schnittstelle 408 kann als kontaktehaftete Schnittstelle ausgebildet sein, zum Beispiel als eine Schnittstelle zum Lesen eines Magnetstreifens der Chipkarte. Alternativ dazu kann die Schnittstelle 408 als kontaktlose Schnittstelle ausgebildet sein, also zum Beispiel als NFC-Schnittstelle. Die Update-Anwendung ist dazu konfiguriert, automatisch ein Updateverfahren einzuleiten und durchzuführen um eine neue Version der Hauptapplikation auf der Chipkarte zu installieren, sofern die auf der Chipkarte bereits installierte Version der Hauptapplikation veraltet ist.

Nach manchen Ausführungsformen beinhaltet das Speichermedium 108 der Chipkarte mehrere Sicherheitsdomänen. Zumindest zwei dieser Sicherheitsdomänen beinhalten jeweils eine Persistenzapplikation sowie eine oder mehrere Hauptapplikationen, wobei jeweils eine Persistenzapplikation und die eine oder die mehreren Hauptapplikationen der gleichen Sicherheitsdomäne eine funktionale Einheit bilden. Der Nachladeautomat kann mehrere signierte Versionen von mehreren verschiedenen Hauptapplikationen verwalten und mehrere Hauptapplikationen im Zuge eines einzigen Updatevorgangs aktualisieren. Der Updateprozess kann unterschiedlich komplex sein, zum Beispiel für verschiedene Nutzergruppen einer bestimmten Applikationslogik verschiedene Versionen der Hauptapplikation vorhalten und während des Updateprozesses die Identität und Gruppenzugehörigkeit des Nutzers, dem die Chipkarte zugeordnet ist, automatisch bestimmen, um eine geeignete Version der Hauptapplikation automatisch auswählen und auf der Chipkarte installieren.

Sobald ein Nutzer die Chipkarte 100 in den Einzug 406 einführt, informiert der Nachladeautomat eine auf diesem installierte Update-Anwendung 136 darüber, dass sich eine Chipkarte im Einzug befindet. Die Update-Anwendung weist sich daraufhin gegenüber der Chipkarte als berechtigt aus, Informationen über die Version von ein oder mehreren Applikationen, die auf der Chipkarte 100 derzeit installiert sind, anzufordern und zu empfangen. Falls die Update-Anwendung erkennt, dass für eine bestimmte auf der Chipkarte installierte Hauptapplikation eine neue Version vorhanden ist, initiiert die Update-Applikation ein Updateverfahren über die Schnittstelle 408, im Zuge dessen die neue Version der Applikation auf die Chipkarte übertragen und dort installiert wird. Die veraltete Version der Applikation wird deinstalliert. Bei der mit einem Update versehenen Version kann es sich um eine neue Version einer Hauptapplikation handeln. Während der Durchführung des Updateverfahrens hält der mechanische Einzug die Chipkarte so lange fest, bis das Updateverfahren abgeschlossen ist. Der Updatevorgang kann z.B. gemäß des für den GlobalPlatform Standard vorgesehenen Updateverfahrens erfolgen. Ein Nutzer kann die Karte also nicht vorzeitig herausziehen und die Applikationslogik der Karte dadurch in einen inkonsistenten Zustand versetzen.

### Bezugszeichenliste

- 100: Chipkarte
- 102: Prozessor
- 104: Schnittstelle
- 106: Arbeitsspeicher
- 108: nicht-flüchtiges Speichermedium
- 110: Kartenmanagement-Modul
- 114: Chipkarten-Betriebssystem
- 116: Java Card API
- 118: Java Card virtuelle Maschine (VM)
- 120: Laufzeitumgebung
- 122-130: Applikationsprogramme
- D1-D5: Daten
- Al: Schnittstelle zu einer chipkartenexternen Anwendung
- 132: Vielzahl von installierten Applikationen
- 134: chipkartenexterne Anwendung
- 136: Update-Anwendung
- 202: Persistenzapplikation
- 204: Hauptapplikation
- 206: Funktionslogik der Hauptapplikation
- D8: Daten
- 208: Schnittstelle
- 210: Persistenz-Logik
- 214: Signatur
- 302-306: Schritte
- 402: Nachladeautomat
- 404: Prozessor
- 406: mechanischer Chipkarteneinzug
- 408: Schnittstelle

## Patentansprüche

1. Chipkarte (100) mit einem Prozessor (102) und einem nicht-flüchtigen Speichermedium (108), wobei die Chipkarte so konfiguriert ist, dass auf dem Speichermedium installierte Applikationen (132), die nicht zur gleichen Sicherheitsdomäne (SD1-SD5, SD8) gehören, voneinander isoliert sind, wobei auf dem Speichermedium zumindest installiert sind:
- eine Persistenzapplikation (202), welche einer ersten Sicherheitsdomäne (SD8) zugeordnet ist und geschützt ist gegen Zugriff durch jegliche chipkartenexterne Anwendung (134), wobei die Persistenzapplikation dadurch gegen Zugriff durch jegliche chipkartenexterne Anwendung (134) geschützt ist, dass sie frei ist von einer APDU Schnittstelle (Al), wobei die Persistenzapplikation eine Programmlogik (210) zur Speicherung von Daten (D8) auf dem Speichermedium (108) und zum Lesen der gespeicherten Daten beinhaltet, wobei die Persistenzapplikation (202) ausschließlich Programmlogik (210) für die Speicherung der Daten (D8) auf dem Speichermedium (108), für das Lesen der gespeicherten Daten von dem Speichermedium und für den Austausch der Daten (D8) über eine weitere Schnittstelle (208) mit einer Hauptapplikation umfasst
- die Hauptapplikation (204), welche der ersten Sicherheitsdomäne (SD8) zugeordnet ist und eine Schnittstelle (Al) zu einer chipkartenexternen Anwendung (134) und eine weitere Schnittstelle (208) zum Austausch der Daten (D8) mit der Persistenzapplikation beinhaltet, wobei die Hauptapplikation eine Programmlogik (206) zur Verarbeitung der Daten (D8) beinhaltet, die so konfiguriert ist, dass bereits verarbeitete Daten (D8) zur Speicherung auf dem Speichermedium (108) über die weitere Schnittstelle (208) an die Persistenzapplikation übermittelt werden und dass zu verarbeitende Daten über die weitere Schnittstelle (208) von der Persistenzapplikation empfangen werden, wobei die Hauptapplikation (204) ausschließlich Programmlogik (206) für den Austausch von Daten mit der externen Anwendung (134) und/oder mit weiteren externen Anwendungen, für den Austausch der Daten (D8) mit der Persistenzapplikation und/oder für die Verarbeitung der Daten (D8) umfasst.

2. Chipkarte nach Anspruch 1,
- wobei in dem Speichermedium (108) ein vom Hersteller oder Herausgeber der Chipkarte bereitgestellter Signaturprüfschlüssel (212) gespeichert ist;
- wobei die Hauptapplikation eine Signatur (214) beinhaltet;
- wobei die Chipkarte so konfiguriert ist, dass im Zuge eines Updates der Hauptapplikation eine bereits installierte Version der Hauptapplikation nur dann durch eine neue Version der Hauptapplikation ersetzt wird, wenn eine Prüfung der Signatur (214) der neuen Version durch den Signaturprüfschlüssel (212) ergibt dass die Signatur der neuen Version valide und vertrauenswürdig ist.

3. Chipkarte nach einem der vorigen Ansprüche,
- wobei die erste Sicherheitsdomäne (SD8) eine Sicherheitsdomäne des Herausgebers der Chipkarte ist; oder
- wobei die erste Sicherheitsdomäne (SD8) eine Sicherheitsdomäne des Herausgebers der Persistenzapplikation und der Hauptapplikation ist.

4. Chipkarte nach einem der vorigen Ansprüche, wobei ausschließlich die Hauptapplikation, nicht die Persistenz-Applikation eine Programmlogik zum Austausch von Daten mit einer chipkartenexternen Anwendung beinhaltet, wobei diese Programmlogik chipkartenseitige Schritte eines Authentifizierungsprotokolls beinhalten, wobei die Programmlogik einen Austausch von Nutzdaten zwischen der Hauptapplikation und der chipkartenexternen Applikation nur dann erlaubt wenn sich die chipkartenexterne Anwendung erfolgreich gegenüber der Hauptapplikation authentifiziert hat.

5. System beinhaltend eine Chipkarte nach einem der vorigen Ansprüche und einen Nachladeautomat (402), wobei der Nachladeautomat (402) eine Update-Anwendung (136), eine Schnittstelle (408) zu der Chipkarte (100) und einen mechanischen Einzug (406) zur Aufnahme der Chipkarte beinhaltet,
- wobei die Schnittstelle (408) als kontaktehaftete oder kontaktlose Schnittstelle ausgebildet ist,
- wobei die Update-Anwendung dazu konfiguriert ist, die neue Version der Hauptapplikationen auf die Chipkarte in einem Updateverfahren über die Schnittstelle (408) zu übertragen und zu installieren,
- wobei der mechanische Einzug dazu ausgebildet ist, während der Durchführung des Updateverfahrens die Chipkarte so lange vor einem Entfernen aus dem Nachladeautomat zu schützen, bis das Updateverfahren abgeschlossen ist.

6. Verfahren, umfassend:
- Bereitstellung (302) einer Chipkarte (100), wobei die Chipkarte einen Prozessor (102) und ein nicht-flüchtiges Speichermedium (108) beinhaltet, wobei die Chipkarte so konfiguriert ist, dass auf dem Speichermedium installierte Applikationen (132), die nicht zur gleichen Sicherheitsdomäne (SD1-SD5, SD8) gehören, voneinander isoliert sind;
- Installation (304) einer Persistenzapplikation (202), welche einer ersten Sicherheitsdomäne (SD8) zugeordnet ist und geschützt ist gegen Zugriff durch jegliche chipkartenexterne Anwendung (134), auf dem Speichermedium (108) der Chipkarte, wobei die Persistenzapplikation dadurch gegen Zugriff durch jegliche chipkartenexterne Anwendung (134) geschützt ist, dass sie frei ist von einer APDU Schnittstelle (Al), wobei die Persistenzapplikation eine Programmlogik (210) zur Speicherung von Daten (D8) auf dem Speichermedium (108) und zum Lesen der gespeicherten Daten beinhaltet, wobei die Persistenzapplikation (202) ausschließlich Programmlogik (210) für die Speicherung der Daten (D8) auf dem Speichermedium (108), für das Lesen der gespeicherten Daten von dem Speichermedium und für den Austausch der Daten (D8) über eine weitere Schnittstelle (208) mit einer applikation umfasst;
- Installation (306) der Hauptapplikation (204), welche der ersten Sicherheitsdomäne (SD8) zugeordnet ist und eine Schnittstelle (Al) zu einer chipkartenexternen Anwendung (134) und eine weitere Schnittstelle (208) zum Austausch der Daten (D8) mit der Persistenzapplikation beinhaltet, auf dem Speichermedium (108) der Chipkarte, wobei die Hauptapplikation eine Programmlogik (206) zur Verarbeitung der Daten (D8) beinhaltet, die so konfiguriert ist, dass bereits verarbeitete Daten (D8) zur Speicherung auf dem Speichermedium (108) über die weitere Schnittstelle (208) an die Persistenzapplikation übermittelt werden und dass zu verarbeitende Daten über die weitere Schnittstelle (208) von der Persistenzapplikation empfangen werden, wobei die Hauptapplikation (204) ausschließlich Programmlogik (206) für den Austausch von Daten mit der externen Anwendung (134) und/oder mit weiteren externen Anwendungen, für den Austausch der Daten (D8) mit der Persistenzapplikation und/oder für die Verarbeitung der Daten (D8) umfasst.

7. Verfahren nach Anspruch 6, umfassend:
- Authentifikation einer chipkartenexternen Update-Anwendung (136) gegenüber der Chipkarte (100);
- Feststellung, durch die Update-Anwendung (136), dass die auf der Chipkarte (100) installierte Hauptapplikation (204) veraltet, unsicher oder fehlerhaft ist;
- Nach erfolgreicher Authentifikation, Installation einer neuen Version der Hauptapplikation in dem Speichermedium (108) durch die Update-Anwendung, wobei die veraltete, unsichere oder fehlerhafte Version der Hauptapplikation vollständig von dem Speichermedium gelöscht wird, wobei die Persistenzapplikation (202) und die von der Hauptapplikation verarbeiteten und die von der Persistenzapplikation gespeicherten Daten (D8) auf dem Speichermedium (108) verbleiben.

8. Verfahren nach Anspruch 7, wobei die Hauptapplikation eine Programmlogik zum Austausch von Daten mit einer chipkartenexternen Anwendung beinhaltet, wobei diese Programmlogik chipkartenseitige Schritte eines Authentifizierungsprotokolls beinhalten, wobei die Programmlogik einen Austausch von Nutzdaten zwischen der Hauptapplikation und der chipkartenexternen Applikation nur dann erlaubt wenn sich die chipkartenexterne Anwendung erfolgreich gegenüber der Hauptapplikation authentifiziert hat, wobei die Feststellung, dass die auf der Chipkarte (100) installierte Hauptapplikation (204) veraltet, unsicher oder fehlerhaft ist, eine Feststellung umfasst, dass die Programmlogik zum Austausch von Daten mit der chipkartenexternen Anwendung veraltet, unsicher oder fehlerhaft ist.

9. Verfahren nach Anspruch 7 oder 8, wobei die Installation umfasst:
- Übertragung der neuen Version der Hauptapplikation durch die Update-Anwendung an die Chipkarte, wobei die neue Version der Hauptapplikation eine Signatur (214) beinhaltet;
- Empfang der neuen Version der Hauptapplikation durch die Chipkarte;
- Prüfung der Signatur durch den Prozessor (102) der Chipkarte mittels eines vor Herausgabe der Chipkarte in dem Speichermedium (108) gespeicherten Signaturprüfschlüssels (212), wobei die Installation der neuen Version der Hauptapplikation und das Löschen der veralteten, unsicheren oder fehlerhaften Version der Hauptapplikation nur dann erfolgt, wenn die Prüfung ergibt, dass die Signatur valide und vertrauenswürdig ist.

10. Verfahren nach Anspruch 7, 8 oder 9, wobei die Installation ferner umfasst:
- Durchführung einer Funktionsprüfung der installierten neuen Version der Hauptapplikation, wobei das Löschen der veralteten, unsicheren oder fehlerhaften Version der Hauptapplikation nur dann erfolgt, wenn die Funktionsprüfung ein Funktionieren der neuen Version der Hauptapplikation ermittelt, wobei im Falle eines ermittelten Nicht-Funktionierens die neue Version der Hauptapplikation von dem Speichermedium (108) entfernt wird und das Löschen der veralteten, unsicheren oder fehlerhaften Version der Hauptapplikation unterbleibt.

11. Verfahren nach einem der vorigen Ansprüche 7-10, ferner mit:
- Authentifikation der Chipkarte (100) gegenüber einer chipkartenexternen Update-Anwendung (136);
- Nach gegenseitiger Authentifikation der Chipkarte und der Update-Anwendung, Aufbauen einer geschützten Kommunikationsverbindung zwischen der Chipkarte und der Update-Anwendung, wobei die neue Version der Hauptapplikation über den sicheren Kommunikationskanal übermittelt wird, wobei die neue Version der Hauptapplikation frei von Nutzdaten ist.

12. Verfahren nach einem der vorigen Ansprüche 7-11 ferner mit:
- Vor Herausgabe der Chipkarte, Vereinbarung eines geheimen Datenwerts zwischen der Chipkarte und einer Update-Anwendung (136), wobei es sich bei der Update-Anwendung um eine Applikation handelt, die zum Erkennen und/oder Updaten einer veralteten, fehlerhaften oder unsicheren Version der auf der Chipkarte installierten Hauptapplikation ausgebildet ist;
- Speichern des geheimen Datenwerts sowohl im Speichermedium (108) der Chipkarte als auch in einem chipkartenexternen Speicher, der der Update-Anwendung zugänglich ist;
- Nach gegenseitiger Authentifikation der Chipkarte und der Update-Anwendung und nach Feststellung, durch die Update-Anwendung (136), dass die auf der Chipkarte (100) installierte Hauptapplikation (204) veraltet, unsicher oder fehlerhaft ist:
• Berechnung eines MAC-Werts einer neuen Version der Hauptapplikation durch die Update-Anwendung unter Verwendung des auf dem chipkartenexternen Speichermedium gespeicherten geheimen Wertes;
• Übertragung des berechneten MAC-Werts von der Update-Anwendung an die Chipkarte;
• Übertragung der neuen Version der Hauptapplikation durch die Update-Anwendung an die Chipkarte;
• Berechnung eines weiteren MAC-Werts der übertragenen neuen Version durch die Chipkarte unter Verwendung des auf dem Speichermedium (108) der Chipkarte gespeicherten geheimen Wertes;
• Vergleich des übertragenen MAC-Werts mit dem weiteren MAC-Wert durch die Chipkarte;
• Installation der neuen Version der Hauptapplikation in dem Speichermedium (108) und Entfernen der veralteten, unsicheren oder fehlerhaften Version der Hauptapplikation (204) von dem Speichermedium (108) nur im Falle der Identität der verglichenen MAC-Werte.

13. Verfahren nach einem der vorigen Ansprüche 7-12, ferner mit:
- Feststellung, durch einen Nachladeautomaten (402), dass eine auf der Chipkarte bereits installierte Applikation veraltet und/oder unsicher ist;
- Deinstallation der bereits installierten Applikation und Durchführung der Installation der Hauptapplikation und der Persistenzapplikation, wobei die Gesamtheit der Hauptapplikation und der Persistenzapplikation einen funktionalen Ersatz der deinstallierten Applikation darstellt.

## Claims

1. Smart card (100) with a processor (102) and a non-volatile storage medium (108), wherein the smart card is configured such that applications (132) which are installed on the storage medium and which do not belong to the same security domain (SD1-SD5, SD8) are isolated from one another, wherein at least the following are installed on the storage medium:
- a persistence application (202), which is assigned to a first security domain (SD8) and is protected from being accessed by any application (134) that is external to the smart card, wherein the persistence application is protected from being accessed by any application (134) that is external to the smart card in that it is free from an APDU interface (Al), wherein the persistence application includes a program logic (210) for storing data (D8) on the storage medium (108) and for reading the stored data, wherein the persistence application (202) comprises exclusively a program logic (210) for storing the data (D8) on the storage medium (108), for reading the stored data from the storage medium and for exchanging data (D8) via a further interface (208) with a main application,
- the main application (204), which is assigned to the first security domain (SD8) and includes an interface (Al) to an application (134) that is external to the smart card and a further interface (208) for exchanging the data (D8) with the persistence application, wherein the main application includes a program logic (206) for processing the data (D8), which program logic is configured such that already processed data (D8) are transmitted to the persistence application via the further interface (208) in order to be stored on the storage medium (108), and data to be processed are received from the persistence application via the further interface (208), wherein the main application (204) comprises exclusively a program logic (206) for exchanging data with the external application (134) and/or with further external applications, for exchanging the data (D8) with the persistence application and/or for processing the data (D8).

2. Smart card according to claim 1,
- wherein a signature verification key (212) provided by the manufacturer or issuer of the smart card is stored in the storage medium (108);
- wherein the main application includes a signature (214);
- wherein the smart card is configured such that an already installed version of the main application is replaced by a new version of the main application during the course of an update of the main application only if an inspection of the signature (214) of the new version by the signature verification key (212) reveals that the signature of the new version is valid and trustworthy.

3. Smart card according to one of the preceding claims,
- wherein the first security domain (SD8) is a security domain of the issuer of the smart card; or
- wherein the first security domain (SD8) is a security domain of the issuer of the persistence application and of the main application.

4. Smart card according to one of the preceding claims, wherein exclusively the main application, and not the persistence application, includes a program logic for exchanging data with an application that is external to the smart card, wherein this program logic includes steps of an authentication protocol that are performed by the smart card, wherein the program logic allows an exchange of payloads between the main application and the application that is external to the smart card only if the application that is external to the smart card has successfully authenticated itself to the main application.

5. System including a smart card according to one of the preceding claims and an installation machine (402), wherein the installation machine (402) includes an update application (136), an interface (408) to the smart card (100), and a mechanical feeder (406) for receiving the smart card,
- wherein the interface (408) is designed as a contact-based or contactless interface,
- wherein the update application is configured to transmit and install the new version of the main applications on the smart card in an update process via the interface (408),
- wherein the mechanical feeder is designed, during the execution of the update process, to protect the smart card against removal from the installation machine until the update process is complete.

6. Method comprising the steps of:
- providing (302) a smart card (100), wherein the smart card includes a processor (102) and a non-volatile storage medium (108), wherein the smart card is configured such that applications (132) which are installed on the storage medium and which do not belong to the same security domain (SD1-SD5, SD8) are isolated from one another,
- installing (304) a persistence application (202) on the storage medium (108) of the smart card, which persistence application is assigned to a first security domain (SD8) and is protected from being accessed by any application (134) that is external to the smart card, wherein the persistence application is protected from being accessed by any application (134) that is external to the smart card in that it is free from an APDU interface (Al), wherein the persistence application includes a program logic (210) for storing data (D8) on the storage medium (108) and for reading the stored data, wherein the persistence application (202) comprises exclusively a program logic (210) for storing the data (D8) on the storage medium (108), for reading the stored data from the storage medium and for exchanging the data (D8) via a further interface (208) with a main application,
- installing (306) the main application (204) on the storage medium (108) of the smart card, which main application is assigned to the first security domain (SD8) and includes an interface (Al) to an application (134) that is external to the smart card and a further interface (208) for exchanging the data (D8) with the persistence application, wherein the main application includes a program logic (206) for processing the data (D8), which program logic is configured such that already processed data (D8) are transmitted to the persistence application via the further interface (208) in order to be stored on the storage medium (108), and data to be processed are received from the persistence application via the further interface (208), wherein the main application (204) comprises exclusively a program logic (206) for exchanging data with the external application (134) and/or with further external applications, for exchanging the data (D8) with the persistence application and/or for processing the data (D8).

7. Method according to claim 6, comprising the steps of:
- authenticating to the smart card (100) an update application (136) that is external to the smart card,
- determining, by the update application (136), that the main application (204) installed on the smart card (100) is out of date, insecure, or faulty,
- following successful authentication, installing a new version of the main application in the storage medium (108) by the update application, wherein the out-of-date, insecure or faulty version of the main application is deleted fully from the storage medium, wherein the persistence application (202) and the data (D8) processed by the main application and stored by the persistence application remain on the storage medium (108).

8. Method according to claim 7, wherein the main application includes a program logic for exchanging data with an application that is external to the smart card, wherein this program logic includes steps of an authentication protocol that are performed by the smart card, wherein the program logic allows an exchange of payloads between the main application and the application that is external to the smart card only if the application that is external to the smart card has successfully authenticated itself to the main application, wherein the determination that the main application (204) installed on the smart card (100) is out of date, insecure or faulty comprises a determination that the program logic for exchanging data with the application that is external to the smart card is out of date, insecure or faulty.

9. Method according to claim 7 or 8, wherein the installation comprises the steps of:
- transmitting the new version of the main application to the smart card by the update application, wherein the new version of the main application includes a signature (214);
- receiving the new version of the main application by the smart card;
- inspecting the signature by the processor (102) of the smart card by means of a signature verification key (212) stored in the storage medium (108) before the smart card is issued, wherein the new version of the main application is installed and the out-of-date, insecure or faulty version of the main application is deleted only if the inspection reveals that the signature is valid and trustworthy.

10. Method according to claim 7, 8 or 9, wherein the installation also comprises the steps of:
- performing a function inspection of the installed new version of the main application, wherein the out-of-date, insecure or faulty version of the main application is deleted only if the function inspection determines a functioning of the new version of the main application, wherein, if a state of non-functioning is determined, the new version of the main application is removed from the storage medium (108) and the out-of-date, insecure or faulty version of the main application is not deleted.

11. Method according to one of preceding claims 7-10, further comprising the steps of:
- authenticating the smart card (100) to an update application (136) that is external to the smart card;
- following successful authentication of the smart card and the update application, establishing a protected communications link between the smart card and the update application, wherein the new version of the main application is transmitted via the secure communications channel, wherein the new version of the main application is free from payloads.

12. Method according to one of preceding claims 7-11, further comprising the steps of:
- prior to the issuing of the smart card, agreeing a secret data value between the smart card and an update application (136), wherein the update application is an application that is designed to identify and/or update an out-of-date, faulty or insecure version of the main application installed on the smart card,
- storing the secret data value both in the storage medium (108) of the smart card and in a memory that is external to the smart card and that is accessible to the update application,
- following mutual authentication of the smart card and the update application and after determining, by the update application (136), that the main application (204) installed on the smart card (100) is out of date, insecure or faulty:
• calculating a MAC value of a new version of the main application by the update application using the secret value stored on the storage medium that is external to the smart card;
• transmitting the calculated MAC value from the update application to the smart card;
• transmitting the new version of the main application by the update application to the smart card;
• calculating a further MAC value of the transmitted new version by the smart card using the secret value stored on the storage medium (108) of the smart card;
• comparing the transmitted MAC value with the further MAC value by the smart card;
• installing the new version of the main application in the storage medium (108) and removing the out-of-date, insecure or faulty version of the main application (204) from the storage medium (108) only in the event that the compared MAC values match.

13. Method according to one of preceding claims 7-12, further comprising the steps of:
- determining, by an installation machine (402), that an application already installed on the smart card is out of date and/or insecure;
- uninstalling the already installed application and installing the main application and the persistence application, wherein the combination of the main application and the persistence application represents a functional replacement of the uninstalled application.

## Revendications

1. Carte à puce (100) dotée d'un processeur (102) et d'un support de stockage (108) non volatil, où la carte à puce est conçue de telle manière que des applications (132) installées sur le support de stockage, qui ne font pas partie des mêmes domaines de sécurité (SD1 à SD5, SD8) sont isolées les unes des autres, où au moins les applications suivantes sont installées sur le support de stockage :
- une application de persistance (202), laquelle est associée à un premier domaine de sécurité (SD8) et est protégée contre un accès par toute application (134) externe à la carte à puce, où l'application de persistance est ainsi protégée contre un accès par toute application (134) externe à la carte à puce de sorte qu'elle est exempte d'une interface de message APDU (Al), où l'application de persistance contient une logique de programme (210) permettant le stockage de données (D8) sur le support de stockage (108) et permettant la lecture des données stockées, où l'application de persistance (202) comprend exclusivement une logique de programme (210) pour le stockage des données (D8) sur le support de stockage (108), pour la lecture des données stockées par le support de stockage et pour l'échange des données (D8) par le biais d'une nouvelle interface (208) avec une application principale,
- l'application principale (204), laquelle est associée aux premiers domaines de sécurité (SD8) et contient une interface (Al) vers une application (134) externe à la carte à puce et une nouvelle interface (208) pour l'échange des données (D8) avec l'application de persistance, où l'application principale contient une logique de programme (206) pour le traitement des données (D8) qui est configurée de telle manière que les données (D8) déjà traitées sont transmises à l'application de persistance pour le stockage sur le support de stockage (108) par le biais de la nouvelle interface (208) et que des données à traiter sont réceptionnées par l'application de persistance par le biais de la nouvelle interface (208), où l'application principale (204) comprend exclusivement une logique de programme (206) pour l'échange de données avec une application (134) externe et/ou avec d'autres applications externes, pour l'échange des données (D8) avec l'application de persistance et/ou pour le traitement des données (D8).

2. Carte à puce selon la revendication 1,
- dans laquelle une clé de vérification de signature (212) fournie par le fabricant ou l'éditeur de la carte à puce est stockée dans le support de stockage (108) ;
- dans laquelle l'application principale contient une signature (214) ;
- dans laquelle la carte à puce est conçue de telle manière qu'au cours d'une mise à jour de l'application principale, une version déjà installée de l'application principale n'est remplacée par une nouvelle version de l'application principale que si une vérification de la signature (214) de la nouvelle version par la clé de vérification de signature (212) a pour résultat que la signature de la nouvelle version est valide et digne de confiance.

3. Carte à puce selon l'une des revendications précédentes,
- dans laquelle le premier domaine de sécurité (SD8) est un domaine de sécurité de l'éditeur de la carte à puce; ou
- dans laquelle le premier domaine de sécurité (SD8) est un domaine de sécurité de l'éditeur de l'application de persistance et de l'application principale.

4. Carte à puce selon l'une des revendications précédentes, dans laquelle exclusivement l'application principale, contrairement à l'application de persistance, contient une logique de programme permettant l'échange de données avec une application externe à la carte à puce, où cette logique de programme contient des étapes d'un protocole d'authentification du côté de la carte à puce, où la logique de programme ne permet un échange de données d'utilisation entre l'application principale et l'application externe à la carte à puce que si l'application externe à la carte à puce s'est authentifiée avec succès vis-à-vis de l'application principale.

5. Système contenant une carte à puce selon l'une des revendications précédentes et un automate de rechargement (402), dans lequel l'automate de rechargement (402) contient une application de mise à jour (136), une interface (408) vers la carte à puce (100) et un système de prélèvement (406) mécanique permettant l'admission de la carte à puce,
- dans lequel l'interface (408) est conçue sous forme d'une interface à contact ou sans contact,
- dans lequel l'application de mise à jour est conçue pour transmettre et installer la nouvelle version de l'application principale sur la carte à puce dans un procédé de mise à jour par le biais de l'interface (408),
- dans lequel le système de prélèvement mécanique est conçu pour protéger la carte à puce contre un retrait de l'automate de rechargement pendant l'exécution du procédé de mise à jour suffisamment longtemps jusqu'à ce que le procédé de mise à jour soit terminé.

6. Procédé comprenant :
- la mise au point (302) d'une carte à puce (100), la carte à puce (102) contenant un processeur (102) et un support de stockage (108) non volatil, la carte à puce étant configurée de sorte que des applications (132) installées sur le support de stockage qui ne font pas partie des mêmes domaines de sécurité (SD1 à SD5, SD8) sont isolées les unes des autres ;
- l'installation (304) d'une application de persistance (202), laquelle est associée à un premier domaine de sécurité (SD8) et est protégée contre un accès par toute application (134) externe à la carte à puce sur le support de stockage (108) de la carte à puce, où l'application de persistance est protégée contre un accès par toute application (134) externe à la carte à puce en ce qu'elle est exempte d'une interface APDU (Al), où l'application de persistance contient une logique de programme (210) pour le stockage de données (D8) sur le support de stockage (108) et pour la lecture des données stockées, où l'application de persistance (202) comprend exclusivement une logique de programme (210) pour le stockage des données (D8) sur le support de stockage (108), pour la lecture des données stockées par le support de stockage et pour l'échange des données (D8) avec une application principale par le biais d'une nouvelle interface (208) ;
- l'installation (306) de l'application principale (204), laquelle est associée au premier domaine de sécurité (SD8) et contient une interface (Al) vers une application (134) externe à la carte à puce et une nouvelle interface (208) pour l'échange des données (D8) avec l'application de persistance, sur le support de stockage (108) de la carte à puce, où l'application principale contient une logique de programme (206) pour le traitement des données (D8) qui est configurée de sorte que des données (D8) déjà traitées sont transmises à l'application de persistance pour le stockage sur le support de stockage (108) par le biais de la nouvelle interface (208), et que des données à traiter sont réceptionnées par l'application de persistance par le biais de la nouvelle interface (208), où l'application principale (204) comprend exclusivement une logique de programme (206) pour l'échange de données avec l'application (134) externe, et/ou avec d'autres applications externes, pour l'échange des données (D8) avec l'application de persistance, et/ou pour le traitement des données (D8).

7. Procédé selon la revendication 6, comprenant :
- l'authentification d'une application de mise à jour (136) externe à la carte à puce vis-à-vis de la carte à puce (100) ;
- le constat, par l'application de mise à jour (136), que l'application principale (204) installée sur la carte à puce (100) est obsolète, non sécurisée ou défectueuse ;
- après l'authentification réussie, l'installation d'une nouvelle version de l'application principale dans le support de stockage (108) par l'application de mise à jour, où la version obsolète, non sécurisée ou défectueuse de l'application principale est complètement effacée du support de stockage, où l'application de persistance (202) et les données (D8) traitées par l'application principale et stockées par l'application de persistance restent sur le support de stockage (108).

8. Procédé selon la revendication 7, dans lequel l'application principale contient une logique de programme pour l'échange de données avec une application externe à la carte à puce, où cette logique de programme contient des étapes d'un protocole d'authentification du côté de la carte à puce, où la logique de programme ne permet un échange de données d'utilisation entre l'application principale et l'application externe à la carte à puce que si l'application externe à la carte à puce s'est authentifiée avec succès vis-à-vis de l'application principale, où le constat que l'application principale (204) installée sur la carte à puce (100) est obsolète, non sécurisée ou défectueuse comprend un constat que la logique de programme pour l'échange de données avec l'application externe à la carte à puce est obsolète, non sécurisée ou défectueuse.

9. Procédé selon la revendication 7 ou la revendication 8, dans lequel l'installation comprend :
- la transmission de la nouvelle version de l'application principale par l'application de mise à jour à la carte à puce, la nouvelle version de l'application principale contenant une signature (214) ;
- la réception de la nouvelle version de l'application principale par la carte à puce ;
- la vérification de la signature par le processeur (102) de la carte à puce au moyen d'une clé de vérification de signature (212) stockée dans le support de stockage (108) avant l'édition de la carte à puce, où l'installation de la nouvelle version de l'application principale et l'effacement de la version de l'application principale obsolète, non sécurisée ou défectueuse n'a lieu que si la vérification a pour résultat que la signature est valide et digne de confiance.

10. Procédé selon la revendication 7, la revendication 8 ou la revendication 9, dans lequel l'installation comprend en outre :
- l'exécution d'une vérification de fonction de la nouvelle version installée de l'application principale, où l'effacement de la version de l'application principale obsolète, non sécurisée ou défectueuse n'a lieu que si la vérification de fonction détermine un fonctionnement de la nouvelle version de l'application principale, où, dans le cas d'un non fonctionnement confirmé, la nouvelle version de l'application principale est enlevée du support de stockage (108) et l'effacement de la version de l'application principale obsolète, non sécurisée ou défectueuse n'est pas fait.

11. Procédé selon l'une des revendications précédentes 7 à 10, avec en outre :
- l'authentification de la carte à puce (100) vis-à-vis d'une application de mise à jour (136) externe à la carte à puce ;
- après l'authentification réciproque de la carte à puce et de l'application de mise à jour, l'établissement d'une liaison de communication sécurisée entre la carte à puce et l'application de mise à jour, où la nouvelle version de l'application principale est transmise par le canal de communication sécurisé, où la nouvelle version de l'application principale est exempte de données d'utilisation.

12. Procédé selon l'une des revendications précédentes 7 à 11, avec en outre :
- avant l'édition de la carte à puce, la convention d'une valeur de donnée secrète entre la carte à puce et une application de mise à jour (136), où, dans le cas de l'application de mise à jour, il s'agit d'une application qui est conçue pour la reconnaissance et/ou la mise à jour d'une version obsolète, défectueuse ou non sécurisée de l'application principale installée sur la carte à puce ;
- le stockage de la valeur de donnée secrète à la fois dans le support de stockage (108) de la carte à puce et dans une mémoire externe à la carte à puce qui est accessible à l'application de mise à jour ;
- après l'authentification réciproque de la carte à puce et de l'application de mise à jour et après le constat, par l'application de mise à jour (136), que l'application principale (204) installée sur la carte à puce (100) est obsolète, non sécurisée ou défectueuse :
• le calcul d'une valeur de contrôle d'accès au support MAC d'une nouvelle version de l'application principale par l'application de mise à jour moyennant l'emploi de la valeur secrète stockée sur le support de stockage externe à la carte à puce ;
• la transmission de la valeur de MAC calculée de l'application de mise à jour à la carte à puce ;
• la transmission de la nouvelle version de l'application principale par l'application de mise à jour à la carte à puce ;
• le calcul d'une nouvelle valeur de MAC de la nouvelle version transmise par la carte à puce moyennant l'emploi de la valeur secrète stockée sur le support de stockage (108) de la carte à puce ;
• la comparaison de la valeur de MAC transmise avec la nouvelle valeur de MAC par la carte à puce ;
• l'installation de la nouvelle version de l'application principale dans le support de stockage (108) et le retrait de la version de l'application principale (204) obsolète, non sécurisée ou défectueuse du support de stockage (108) uniquement dans le cas de l'identité des valeurs de MAC comparées.

13. Procédé selon l'une des revendications précédentes 7 à 12, avec en outre :
- le constat, par l'automate de rechargement (402), qu'une application déjà installée sur la carte à puce est obsolète et/ou non sécurisée ;
- la désinstallation de l'application déjà installée et l'exécution de l'installation de l'application principale et de l'application de persistance, où la totalité de l'application principale et de l'application de persistance représente un remplacement fonctionnel de l'application désinstallée.
